# EUROPEAN PATENT APPLICATION

(11) **EP 4 738 071 A1**
(43) Date of publication of application: **06.05.2026**
(21) Application number: 24845753.3
(22) Date of filing: 23.05.2024
(51) Int. Cl.: G06F 3/01, G06F 1/16, G06F 3/048, G06F 3/14

(54) **ELECTRONIC DEVICE, METHOD, AND COMPUTER-READABLE STORAGE MEDIUM FOR CONTROLLING EXTERNAL ELECTRONIC DEVICE TO OUTPUT VIBRATIONS**

(30) Priority: 24.07.2023 KR 20230096018; 23.08.2023 KR 20230110902
(71) Applicant: Samsung Electronics Co., Ltd., Suwon-si, Gyeonggi-do 16677 (KR)
(72) Inventor: YIM, Sunghoon, Suwon-si Gyeonggi-do 16677 (KR); KIM, Hyunsoo, Suwon-si Gyeonggi-do 16677 (KR); NAM, Myoungwoo, Suwon-si Gyeonggi-do 16677 (KR); SHIM, Jeaguk, Suwon-si Gyeonggi-do 16677 (KR); YOO, Nagyeom, Suwon-si Gyeonggi-do 16677 (KR); LEE, Yoonho, Suwon-si Gyeonggi-do 16677 (KR)
(74) Representative: HGF
(86) International application number: PCT/KR2024/007006
(87) International publication number: WO 2025/023449

(57) **Abstract**

A wearable device may include a communication circuit, a display, and at least one processor. The wearable device can display a graphic effect, which spreads out into an external space from a first location spaced apart from the wearable device, on the display in response to an event that occurs at the first location and causes the output of vibrations. The wearable device can determine the distance between the first location and a second location of an external electronic device spaced apart from the wearable device. The wearable device, on the basis of determining the distance, can identify the point in time at which at least a portion of the graphic effect intersects with the second location. The present document may relate to a metaverse service for enhancing the interconnectivity between a real object and a virtual object. For example, the metaverse service may be provided over a fifth generation (5G) and/or sixth generation (6G)-based network.

## Description

### [Technical Field]

The present disclosure relates to an electronic device, a method, and a computer readable storage medium for controlling an external electronic device to output vibration.

### [Background Art]

In order to provide an enhanced user experience, an electronic device providing an extended reality (XR) service displaying information generated by a computer in connection with an external object in a real-world are being developed. The electronic device may provide the extended reality service to a user, using a virtual object corresponding to the user.

### [Disclosure]

### [Technical Solution]

According to an embodiment, in a wearable device, the wearable device may comprise communication circuitry, a display, at least one processor including processing circuitry, and memory comprising one or more storage media storing instructions. The instructions, when executed by the at least one processor individually or collectively, may cause the electronic device to display a graphic effect spreading from a first point to an external space, on the display, in response to an event that occurs at the first point separated from the wearable device and causes an output on vibration. The instructions, when executed by the at least one processor individually or collectively, may cause the electronic device to identify a distance between the first point and a second point of an external electronic device separated from the wearable device. The instructions, when executed by the at least one processor individually or collectively, may cause the electronic device to identify a time point at which at least a portion of the graphic effect intersects the second point based on identifying the distance. The instructions, when executed by the at least one processor individually or collectively, may cause the electronic device to transmit, through the communication circuitry, a signal for controlling an actuator of the external electronic device to output vibration having a magnitude determined based on the distance at the time point to the external electronic device.

According to an embodiment, in a method of a wearable device, the method may comprise displaying a graphic effect spreading from a first point to an external space, on a display, in response to an event that occurs at the first point separated from the wearable device and causes an output on vibration. The method may comprise identifying a distance between the first point and a second point of an external electronic device separated from the wearable device. The method may comprise identifying a time point at which at least a portion of the graphic effect intersects the second point based on identifying the distance. The method may comprise transmitting, through communication circuitry, a signal for controlling an actuator of the external electronic device to output vibration having a magnitude determined based on the distance at the time point to the external electronic device.

According to an embodiment, in a computer readable storage medium storing instructions, the instructions, when executed by a processor of a wearable device, may cause the wearable device to display a graphic effect spreading from a first point to an external space, on a display, in response to an event that occurs at the first point separated from the wearable device and causes an output on vibration. The instructions executed by the processor may cause the wearable device to identify a distance between the first point and a second point of an external electronic device separated from the wearable device. The instructions executed by the processor may cause the wearable device to identify a time point at which at least a portion of the graphic effect intersects the second point based on identifying the distance. The instructions executed by the processor may cause the wearable device to transmit, through communication circuitry, a signal for controlling an actuator of the external electronic device to output vibration having a magnitude determined based on the distance at the time point to the external electronic device.

### [Description of the Drawings]

FIGS. 1A and 1B illustrate an example of a block diagram of a wearable device and an external electronic device according to an embodiment.
FIG. 2A illustrates an example of a perspective view of a wearable device according to an embodiment.
FIG. 2B illustrates an example of one or more hardware disposed in a wearable device according to an embodiment.
FIGS. 3A to 3B illustrate an example of an exterior of a wearable device according to an embodiment.
FIG. 4 illustrates an example of an operation in which a wearable device according to an embodiment controls an external electronic device based on a distance between a point of an event and a point of an external electronic device.
FIG. 5 illustrates an example of an operation in which a wearable device according to an embodiment controls an external electronic device based on an event.
FIG. 6 illustrates an example of a graphic effect displayed based on an event by a wearable device according to an embodiment.
FIG. 7 illustrates an example of a change in a vibration intensity outputted from an external electronic device according to an embodiment.
FIG. 8 illustrates an example of a virtual space including a plurality of wearable devices according to an embodiment.
FIG. 9 illustrates an example of a screen for adjusting a vibration intensity of an external electronic device according to an embodiment.
FIG. 10 illustrates an example of a flowchart indicating an operation of a wearable device according to an embodiment.
FIG. 11 is an exemplary diagram of a network environment in which a metaverse service is provided through a server according to an embodiment.

### [Mode for Invention]

The electronic device according to various embodiments may be one of various types of electronic devices. The electronic devices may include, for example, a portable communication device (e.g., a smartphone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

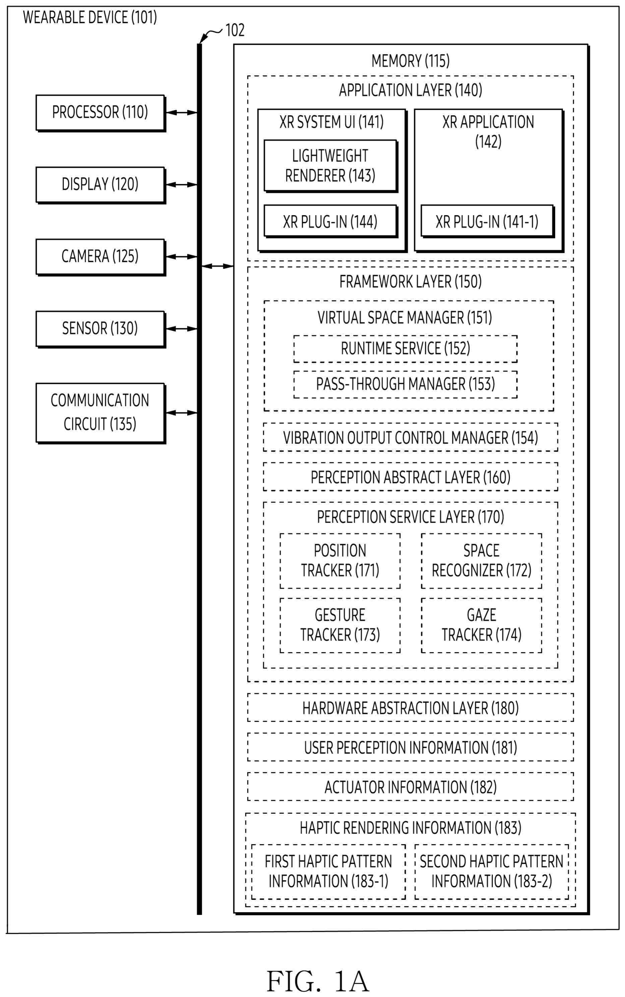

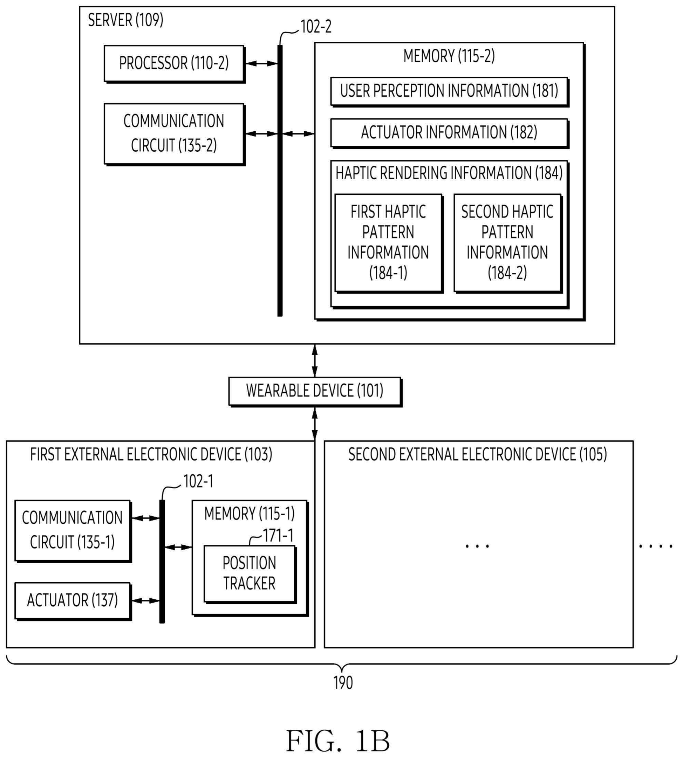

FIGS. 1A and 1B illustrate an example of a block diagram of a wearable device and an external electronic device according to an embodiment. In an embodiment, in terms of being owned by a user, a wearable device 101 may be referred to as a terminal (or a user terminal). For example, the terminal may include a personal computer (PC) such as a laptop and a desktop. For example, the terminal may include a smartphone, a smartpad, and/or a tablet PC. The terminal may include a smart accessory such as a smartwatch and/or a head-mounted device (HMD).

According to an embodiment, the wearable device 101 may log in to an XR service based on execution of an XR application by being linked with a server in a state of establishing a communication link with the server. The wearable device 101 may receive input information for using the XR service from an external electronic device, and display a screen indicating at least a portion of a virtual space corresponding to the input information.

For example, the wearable device 101 may include the head-mounted display (HMD) wearable on a head of the user. According to an embodiment, in a state of being worn by the user, the wearable device 101 may include a camera disposed toward a front of the user. The front of the user may include a direction in which the head of the user and/or a gaze of the user faces. According to an embodiment, the wearable device 101 may include a sensor for identifying the head of the user and/or a motion of the wearable device 101, in the state of being worn by the user. The wearable device 101 may identify an angle (or a pose) of the wearable device 113 based on data of the sensor. In order to provide a user interface (UI) based on virtual reality (VR), augmented reality (AR), and/or mixed reality (MR) to the user wearing the wearable device 101, the wearable device 101 may control the camera and/or the sensor. The UI may be related to a metaverse service and/or a notification service provided by the wearable device 101 and/or a server connected to the wearable device 101.

According to an embodiment, the wearable device 101 may execute a function related to the augmented reality (AR) and/or the mixed reality (MR). In the state in which the user wears the wearable device 101, the wearable device 101 may include at least one lens disposed adjacent to eyes of the user. Ambient light passing through the lens of the wearable device 101 may be coupled (or mixed) with light emitted from a display 120 of the wearable device 101. A display area of the display may be formed in the lens through which the ambient light passes through. Since the wearable device 101 couples the ambient light and the light emitted from the display, the user may see an image in which a real object recognized by the ambient light and a virtual object formed by the light emitted from the display are mixed.

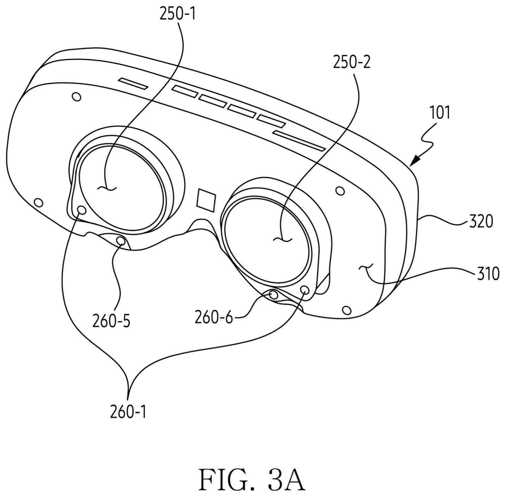

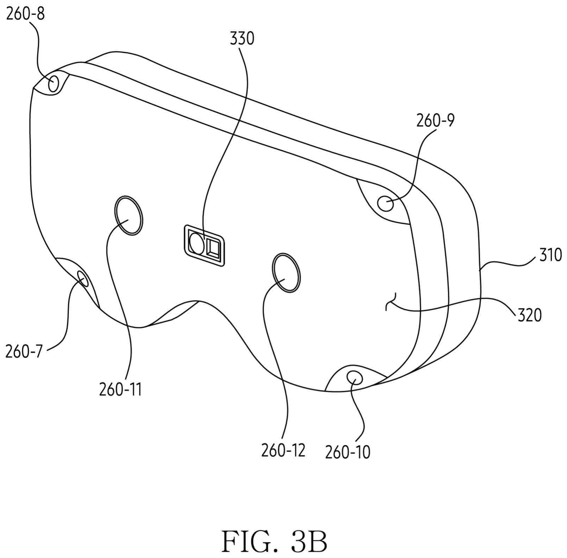

According to an embodiment, the wearable device 101 may execute a function related to a video see-through (VST) and/or the virtual reality (VR). In the state in which the user wears the wearable device 101, the wearable device 101 may include a housing covering the eyes of the user. The wearable device 101 may include a display disposed on a first surface (e.g., a first surface 310 of FIG. 3A) facing the eyes in the state. The wearable device 101 may include a camera (e.g., cameras 260-7, 260-8, 260-9, 260-10, 260-11, and 260-12 of FIG. 3B) disposed on a second surface (e.g., a second surface 320 of FIG. 3A) opposite to the first surface. The wearable device 101 may obtain frame images including ambient light, by using the camera. The wearable device 101 may cause the user to recognize the ambient light through the display, by outputting the frame images in the display disposed on the first surface. A display area of the display disposed on the first surface may be formed by one or more pixels included in the display. The wearable device 101 may synthesizing a virtual object in the frame images outputted through the display to cause the user to recognize the virtual object together with a real object recognized by the ambient light.

According to an embodiment, the wearable device 101 may provide a user experience based on the mixed reality (MR), using a virtual space. The wearable device 101 may generate a virtual space mapped to an external space by recognizing the external space (e.g., a real space) including the wearable device 101. Spatial perception performed by the wearable device 101 may include SLAM and/or spatial mapping (e.g., scene understanding).

According to an embodiment, the wearable device 101 may identify a 6 degrees of freedom pose (a 6 dof pose) of the wearable device 101, using a sensor 130 of the wearable device 101. The wearable device 101 may identify input information based on the 6 degrees of freedom pose. The input information may include at least one of position information, view point information, or pose information of the wearable device 101 identified by one or more programs included in the wearable device 101.

According to an embodiment, the wearable device 101 may receive, through communication circuitry, position information from one or more external electronic devices 190 in a state of being connected to the one or more external electronic devices 190. For example, the wearable device 101 may identify an event that occurs in a virtual space and causes an output on vibration. The wearable device 101 may obtain a distance between a point of the event and points of the one or more external electronic devices 190 identified by the position information. The wearable device 101 may transmit a signal for controlling an actuator included in the one or more external electronic devices 190 based on the distance.

Referring to 1A, according to an embodiment, the wearable device 101 may include at least one of a processor 110, memory 115, the display 120, a camera 125, the sensor 130, or communication circuitry 135. The processor 110, the memory 115, the display 120, the camera 125, the sensor 130, and the communication circuitry 135 may be electronically and/or operably coupled with each other by an electronical component such as a communication bus 102. A type and/or the number of hardware component included in the wearable device 101 is not limited as illustrated in FIG. 1A. For example, the wearable device 101 may include only a portion of the hardware components illustrated in FIG. 1A. Elements (e.g., layers and/or modules) in the memory described below may be in a logically divided state. However, it is not limited thereto.

According to an embodiment, the processor 110 of the wearable device 101 may include a hardware component to process data based on one or more instructions. For example, the hardware component to process the data may include an arithmetic and logic unit (ALU), a field programmable gate array (FPGA), and/or a central processing unit (CPU). The number of processors 110 may be one or more. For example, the processor 110 may have a structure of a multi-core processor such as a dual core, a quad core, or a hexa core.

According to an embodiment, the memory 115 of the wearable device 101 may include a hardware component for storing data and/or instructions inputted to and/or outputted from the processor 110. For example, the memory 115 may include a volatile memory such as a random-access memory (RAM), and/or a non-volatile memory such as a read-only memory (ROM). For example, the volatile memory may include at least one of a dynamic RAM (DRAM), a static RAM (SRAM), a Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, and an embedded multi media card (eMMC).

In an embodiment, the display 120 of the wearable device 101 may output visualized information to the user of the wearable device 101. For example, the display 120 may output the visualized information to the user, by being controlled by the processor 110 including a circuit such as a graphic processing unit (GPU). The display 120 may include a flat panel display (FPD), and/or electronic paper. The FPD may include a liquid crystal display (LCD), a plasma display panel (PDP), and/or one or more light emitting diodes (LEDs). The LED may include an organic LED (OLED).

In an embodiment, the camera 125 of the wearable device 101 may include one or more optical sensors (e.g., a charged coupled device (CCD) sensor and a complementary metal oxide semiconductor (CMOS) sensor) generating an electrical signal indicating a color and/or brightness of light. A plurality of optical sensors included in the camera 125 may be disposed in a form of a 2 dimensional array. The camera 125 may generate 2 dimensional frame data corresponding to light reaching the optical sensors of the 2 dimensional array by substantially simultaneously obtaining electrical signals of each of the plurality of optical sensors. For example, photo data captured using the camera 125 may mean a 2 dimensional frame data obtained from the camera 125. For example, video data captured using the camera 125 may mean a sequence of a plurality of 2 dimensional frame data obtained from the camera 125 according to a frame rate. The camera 125 may be disposed toward a direction in which the camera 125 receives light, and may further include flash light to output light toward the direction.

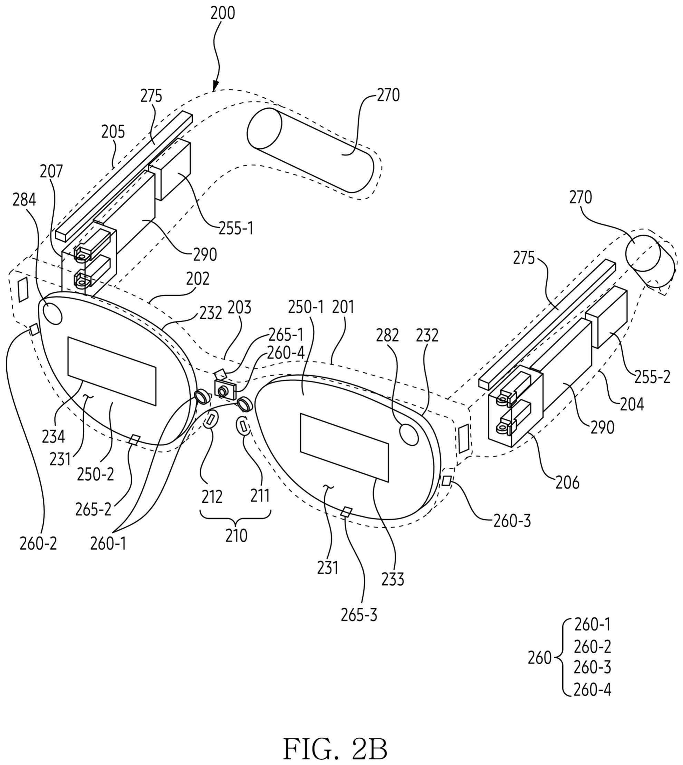

According to an embodiment, the wearable device 101 may include a plurality of cameras disposed toward different directions, as an example of the camera 125. Among the plurality of cameras, a first camera may be referred to as a gesture perception camera (e.g., a gesture perception camera 260-2 or 260-3 of FIG. 2B), and a second camera may be referred to as an eye tracking camera (e.g., an eye tracking camera 260-1 of FIG. 2B). The wearable device 101 may identify a position, a form, and/or a gesture of a hand by using an image obtained using the first camera. The wearable device 101 may identify the direction of the gaze of the user wearing the wearable device 101, by using an image obtained using the second camera. As an example, a direction in which the first camera faces and a direction in which the second camera faces may be opposite to each other.

According to an embodiment, the sensor 130 of the wearable device 101 may generate electronic information that may be processed by the processor 110 and/or the memory 115 of the wearable device 101 from non-electronic information related to the wearable device 101. The information may be referred to as sensor data. The sensor 130 may include a global positioning system (GPS) sensor to detect a geographic location of the wearable device 101, an image sensor, an illumination sensor and/or a time-of-flight (ToF) sensor, and an inertial measurement unit (IMU) to detect a physical motion of the wearable device 101.

In an embodiment, the communication circuitry 135 of the wearable device 101 may include a hardware component to support transmission and/or reception of an electrical signal between the wearable device 101 and an external electronic device. For example, the communication circuitry 135 may include at least one of a modem, an antenna, and an optic/electronic (O/E) converter. The communication circuitry 135 may support transmission and/or reception of the electrical signal based on various types of protocols such as Ethernet, a local area network (LAN), a wide area network (WAN), wireless fidelity (WiFi), Bluetooth, Bluetooth low energy (BLE), ZigBee, long term evolution (LTE), 5G new radio (NR), and/or 6G.

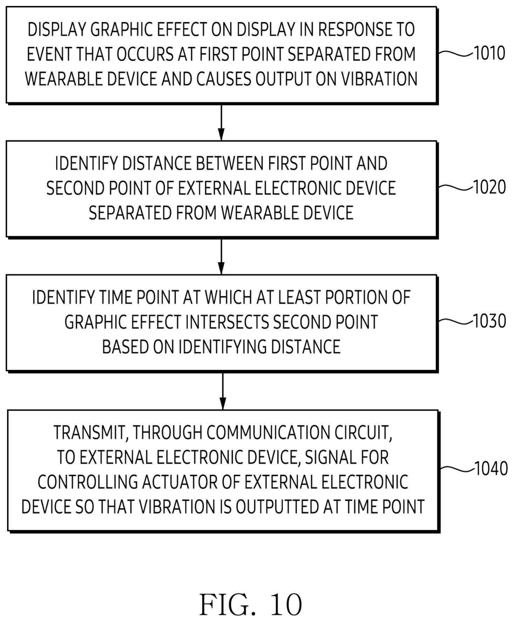

According to an embodiment, in the memory 115 of the wearable device 101, one or more instructions (or commands) indicating a calculation and/or an operation to be performed by the processor 110 of the wearable device 101 on data may be stored. A set of one or more instructions may be referred to as a program, firmware, an operating system, a process, a routine, a sub-routine, and/or an application. For example, the wearable device 101 and/or processor 110 may perform at least one of operations of FIG. 10 when a set of a plurality of instruction distributed in a form of an operating system, firmware, a driver, and/or an application is executed. Hereinafter, an application being installed in the wearable device 101 may mean that one or more instructions provided in a form of an application are stored in the memory 115, and the one or more applications are stored in a format (e.g., a file having an extension designated by the operating system of the wearable device 101) that is executable by the processor 110. As an example, the application may include a program and/or a library related to a service provided to the user.

Referring to FIG. 1A, programs installed in the wearable device 101 may be classified as any one layer of different layers including an application layer 140, a framework layer 150, and/or a hardware abstraction layer (HAL) 180 based on a target. For example, in the hardware abstraction layer 180, programs (e.g., a module, or a driver) designed to target hardware (e.g., the display 120, the camera 120, and/or the sensor 130) of the wearable device 101 may be classified. The framework layer 150 may be referred to as an XR framework layer in that one or more programs for providing an extended reality (XR) service are included. For example, FIG. 1A illustrates layers separately in the memory 115, but the layers may be logically classified. However, it is not limited thereto. According to an embodiment, the layers may be stored in a designated area in the memory 115.

For example, in the framework layer 150, programs (e.g., a position tracker 171, a space recognizer 172, a gesture tracker 173, and/or a gaze tracker 174) designed to target at least one of the hardware abstraction layer 180 and/or the application layer 140 may be classified. The programs classified as the framework layer 150 may provide an application programming interface (API) executable based on another program.

For example, in the application layer 140, a program designed to target the user controlling the wearable device 101 may be classified. As an example of the programs classified as the application layer 140, an extended reality (XR) system user interface (UI) and/or an XR application 142 are exemplified, but an embodiment is not limited thereto. For example, the programs (e.g., a software application) classified as the application layer 140 may cause execution of a function supported by the programs classified as the framework layer 150, by calling the application programming interface (API).

For example, based on execution of an XR system user interface (UI) 141, the wearable device 101 may display one or more visual objects on the display 120 for performing interaction with the user for using a virtual space. A visual object may mean an object deployable in a screen for transmission and/or interaction of information, such as text, an image, an icon, a video, a button, a check box, a radio button, a text box, a slider and/or a table. The visual object may be referred to as a visual guide, a virtual object, a visual element, a UI element, a view object, and/or a view element. The wearable device 101 may provide a service capable of controlling functions available in the virtual space to the user, based on the execution of the XR system UI 141.

Referring to FIG. 1A, a lightweight renderer 143 and/or an XR plug-in 144 are illustrated to be included in the XR system UI 141, but is not limited thereto. For example, the XR system UI 141 may cause execution of a function supported by the lightweight renderer 143 and/or the XR plug-in 144 included in the framework layer 150.

For example, the wearable device 101 may obtain a resource (e.g., the API, a system process, and/or a library) used to define, generate, and/or execute a rendering pipeline in which a partial change is allowed based on execution of the lightweight renderer 143. The lightweight renderer 143 may be referred to as a lightweight renderer pipeline in terms of defining the rendering pipeline in which the partial change is allowed. The lightweight renderer143 may include a renderer (e.g., a prebuilt renderer) built before execution of a software application. For example, the wearable device 101 may obtain resource (e.g., the API, a system process, and/or a library) used to define, generate, and/or execute an entire rendering pipeline based on execution of the XR plug-in 144. The XR plug-in 144 may be referred to as an open XR native client in terms of defining (or setting) the entire rendering pipeline.

For example, the wearable device 101 may display a screen indicating at least a portion of a virtual space on the display 120, based on execution of the XR application 142. An XR plug-in 144-1 included in the XR application 142 may be referred to the XR plug-in 144 of the XR system UI 141. Among descriptions of the XR plug-in 144-1, a description overlapping a description of the XR plug-in 144 may be omitted. The wearable device 101 may cause execution of a virtual space manager 151, based on the execution of the XR application 142.

According to an embodiment, the wearable device 101 may provide a virtual space service, based on the execution of the virtual space manager 151. For example, the virtual space manager 151 may include a platform (e.g., an Android platform) for supporting the virtual space service. Based on the execution of the virtual space manager 151, the wearable device 101 may display a pose of a virtual object indicating a pose of the user rendered, using data obtained through the sensor 130 on a display. The virtual space manager 151 may be referred to as a composition presentation manager (CPM).

For example, the virtual space manager 151 may include a runtime service 152. As an example, the runtime service 152 may be referred to as an OpenXR runtime module. The wearable device 101 may be used to provide at least one of a pose prediction function of the user, a frame timing function, and/or a space input function through the wearable device 101 based on execution of the runtime service 152. As an example, the wearable device 101 may be used to perform rendering for the virtual space service to the user based on the execution of the runtime service 152. For example, an application (e.g., unity or an OpenXR native application) may be implemented based on the execution of the runtime service 152.

For example, the virtual space manager 151 may include a pass-through manager 153. While displaying a screen indicating the virtual space on the display 120, based on execution of the pass-through manager 153, the wearable device 101 may overlap and display another screen indicating an actual space obtained through the camera 125 on at least a portion of the screen.

For example, the virtual space manager 151 may include a vibration output control manager 154. The wearable device 101 may identify user perception information 181, actuator information 182, and/or haptic rendering information 183 based on execution of the vibration output control manager 154. The wearable device 101 may obtain data for controlling an actuator of each of the one or more external electronic devices 190 of the wearable device 101, using identified information.

For example, a perception abstract layer 160 may be used for data exchange between the virtual space manager 151 and a perception service layer 170. In terms of being used for the data exchange between the virtual space manager 151 and the perception service layer 170, the perception abstract layer 160 may be referred to as an interface. As an example, the perception abstract layer 160 may be referred to as OpenPX. The perception abstract layer 160 may be used for a perception client and a perception service.

According to an embodiment, the perception service layer 170 may include one or more programs for processing data obtained from the sensor 130 (or the camera 125). The one or more programs may include at least one of the position tracker 171, the space recognizer 172, the gesture tracker 173, and/or the gaze tracker 174. A type and/or the number of the one or more programs included in the perception service layer 170 is not limited to those illustrated in FIG. 1A.

For example, the wearable device 101 may identify a pose of the wearable device 101, using the sensor 130, based on execution of the position tracker 171. The wearable device 101 may identify a 6 degrees of freedom pose (6 dof pose) of the wearable device 101 by using data obtained using the camera 125 and the IMU, based on the execution of the position tracker 171. The position tracker 171 may be referred to as a head tracking (HeT) module.

For example, the wearable device 101 may be used to configure a surrounding environment of the wearable device 101 (or the user of the wearable device 101) into a 3 dimensional virtual space, based on execution of the space recognizer 172. Based on the execution of the space recognizer 172, the wearable device 101 may reconstruct the surrounding environment of the wearable device 101 in 3 dimensions by using data obtained using the camera 125. The wearable device 101 may identify at least one of a plane, an inclination, and a step, based on the surrounding environment of the wearable device 101 reconstructed in the 3 dimensions, based on the execution of the space recognizer 172. The space recognizer 172 may be referred to as a scene understanding (SU) module.

For example, the wearable device 101 may be used to identify (or recognize) a pose and/or a gesture of a hand of the user of the wearable device 101, based on execution of the gesture tracker 173. As an example, the wearable device 101 may identify the pose and/or the gesture of the hand of the user using data obtained from the sensor 130, based on the execution of the gesture tracker 173. As an example, based on the execution of the gesture tracker 173, the wearable device 101 may identify the pose and/or the gesture of the hand of the user, based on data (or an image) obtained using a camera. The gesture tracker 173 may be referred to as a hand tracking (HaT) module and/or a gesture tracking module.

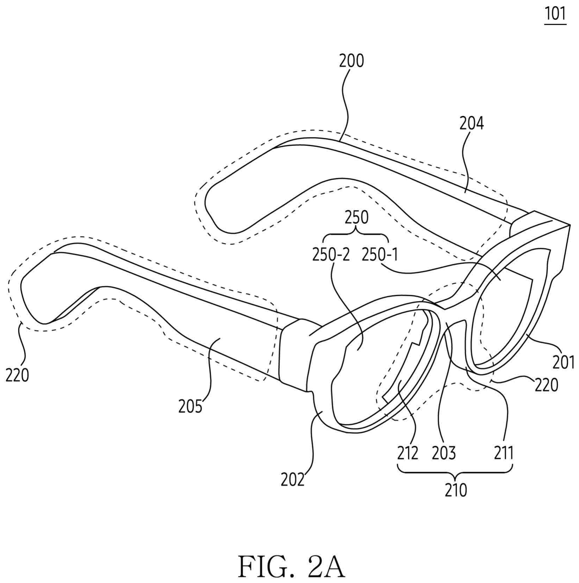

For example, the wearable device 101 may identify (or track) movement of the eyes of the user of the wearable device 101, based on execution of the gaze tracker 174. As an example, the wearable device 101 may identify the movement of the eyes of the user by using data obtained from at least one sensor based on the execution of the gaze tracker 174. As an example, the wearable device 101 may identify the movement of the eyes of the user, based on data obtained using a camera (e.g., a gaze tracking camera 260-1 of FIGS. 2A and 2B) and/or an infrared light emitting diode (IR LED) based on the execution of the gaze tracker 174. The gaze tracker 174 may be referred to as an eye tracking (ET) module and/or a gaze tracking module.

For example, the perception service layer 170 of the wearable device 101 may further include a face tracker for tracking a face of the user. For example, the wearable device 103 may identify (or track) facial movement of the user and/or a facial expression of the user, based on execution of the face tracker. The wearable device 101 may estimate the facial expression of the user based on the facial movement of the user, based on the execution of the face tracker. As an example, the wearable device 101 may identify the facial movement of the user and/or the facial expression of the user based on data (e.g., an image) obtained using a camera, based on the execution of the face tracker.

For example, the user perception information 181 may include information indicating sensitivity of touch sensation corresponding to each of body parts of the user. For example, the touch sensation may include kinesthetic sensation that affects movement sensation and/or tactile sensation that is transmitted to the skin. The kinesthetic sensation may be identified based on a form of force-feedback by an external force to a body part of the user. The tactile sensation may mean sensation of feeling a difference in physical pressure, vibration, or a temperature. According to an embodiment, the wearable device 101 or the one or more external electronic devices 190 may provide the tactile sensation to the user using an actuator outputting vibration. For example, the wearable device 101 or the one or more external electronic devices 190 may further include an electronic component to provide the tactile sensation to the user by pressing a body part, such as a pin array, or by outputting an electrical stimulus to the body part.

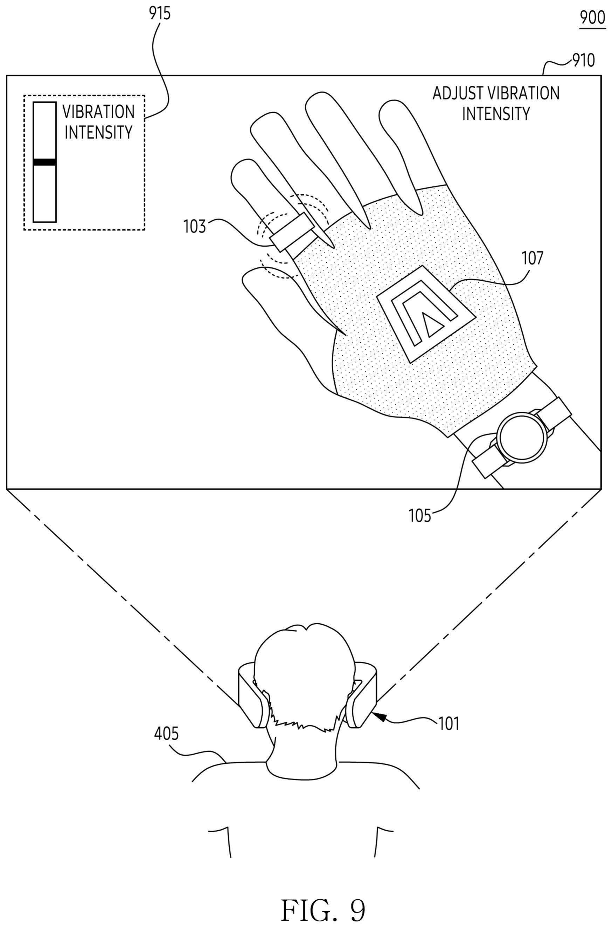

For example, the user perception information 181 may be obtained based on a point of each of the body parts, a type of an actuator included in an external electronic device worn on the body part, and a vibration intensity (or a frequency intensity) outputted from the actuator. The user perception information 181 may be identified based on a psychophysics methodology. The wearable device 101 may obtain the user perception information 181 corresponding to the body parts, using an intensity of vibration outputted from each of the one or more external electronic devices 190 worn on each of the body parts. The user perception information 181 may be received from a server 109. For example, the user perception information 181 may be obtained using a user interface for the wearable device 101 to change the intensity of vibration outputted from each of the one or more external electronic devices 190. An example of an operation in which the wearable device 101 obtains the user perception information 181 will be described later with reference to FIG. 9.

For example, actuator information 182 may include information indicating a type of vibration capable of being outputted through the actuator. For example, it may include a vibro-tactile type, a force feedback type, an electro-tactile type, a skin deformation type, a surface friction type, and/or a thermal type. The actuator information 182 may include information indicating the number of actuators included in each of the one or more external electronic devices 190. The actuator information 182 may include haptic pattern information capable of being outputted using the actuator included in each of the one or more external electronic devices 190, an output intensity of the actuator, a vibration intensity of the actuator, a voltage intensity of the actuator, a friction intensity of the actuator, and/or a frequency range of the actuator. The actuator information 182 may include time information required for each of the one or more external electronic devices 190 to control the actuator. For example, the wearable device 101 may identify a sync between an event that occurs in a virtual space and vibration outputted from the actuator, based on time required for the one or more external electronic devices 190 to control the actuator, using the time information.

For example, the actuator information 182 may include a type of data (e.g., an input value) that causes execution of the actuator. As an example, in a case of an actuator (e.g., a vibro-tactile type) including an eccentric motor, the actuator information 182 may include data indicating an output intensity and/or a frequency mapped to a voltage intensity. However, it is not limited thereto.

For example, the haptic rendering information 183 may include information on an event that occurs in the virtual space. For example, the haptic rendering information 183 may be provided for interaction between the user and the virtual space. The haptic rendering information may include haptic feedback. The haptic rendering information may include information for outputting vibration of a designated pattern.

The event may be identified by interaction between a virtual object disposed in the virtual space and a body part in contact with the virtual object. The event may be provided from a server to the wearable device 101. The wearable device 101 may identify a first point at which the event occurs. The first point may be referred to as a haptic interaction point (HIP) in terms of a point at which interaction for causing vibration is identified.

For example, in a case of identifying the event that occurs at the first point, the wearable device 101 may identify first haptic pattern information 183-1 indicating vibration related to the event. For example, the first haptic pattern information 183-1 may be vibration of a pattern corresponding to a content in a case that a virtual object on a screen of the wearable device 101 and the user interact. The first haptic pattern information 183-1 may indicate occurrence information of a specific event such as contact or collision with the virtual object. In the first haptic pattern information 183-1, a type of touch sensation (e.g., kinesthetic sensation, and/or tactile sensation) to be provided to the user may be identified based on information of a virtual object, a type of interaction (e.g., contact between the virtual object and a fingertip), and a type of the one or more external electronic devices 190 connected to the wearable device 101.

For example, in a case that a type of the actuator included in the one or more external electronic devices 190 is a first type (e.g., a force feedback-type), the first haptic pattern information 183-1 may include haptic output information corresponding to the first type. For example, in a case that information of the virtual object or a type of interaction is related to the first type, the first haptic pattern information 183-1 may include haptic pattern information corresponding to the first type. However, it is not limited thereto.

For example, in a case that the type of the actuator included in the one or more external electronic devices 190 is a second type (e.g., a tactile feedback-type), the wearable device 101 may obtain the first haptic pattern information 183-1 indicating a vibration pattern.

For example, in a case that the type of the actuator included in the one or more external electronic devices 190 is the second type (e.g., the tactile feedback-type), and of the information of the virtual object and the type (e.g., contact between the virtual object and a fingertip) of the interaction is related to the first type (e.g., the force feedback-type), the wearable device 101 may obtain the first haptic pattern information 183-1 based on changing the haptic pattern information corresponding to the first type into haptic pattern information indicating a vibration pattern.

Since the event according to an embodiment occurs in the virtual space, the wearable device 101 may infer the first haptic pattern information 183-1 to be used to output vibration in a real space.

For example, the wearable device 101 may identify the haptic pattern information corresponding to the first type. The wearable device 101 may calculate a penetration depth based on identifying interaction indicating contact between the virtual object and a body part. The wearable device 101 may identify a designated stiffness coefficient for the virtual object, using information on the virtual object. The wearable device 101 may obtain an intensity of a force to be occurring by the interaction based on designated information (e.g., information corresponding to a penalty-based method) using the designated stiffness coefficient and the penetration depth. For example, the wearable device 101 may identify interaction indicating collision between a moving virtual object and a body part. The wearable device 101 may obtain an intensity of a force to be occurring by the interaction, using a difference between speed before identifying the collision and speed after identifying the collision. As an example, the wearable device 101 may obtain the intensity of the force based on a dynamics engine (or a program indicating a physical engine). The wearable device 101 may obtain the first haptic pattern information 183-1 indicating the intensity of the force.

For example, the wearable device 101 may obtain haptic pattern information corresponding to the second type. The wearable device 101 may identify a natural vibration rate (or frequency) of the virtual object, using information on the virtual object. The wearable device 101 may calculate (or obtain) an intensity of vibration to be generated in the real space based on the interaction between the virtual object and the body part and the natural vibration rate. The wearable device 101 may obtain the first haptic pattern information 183-1 indicating the vibration based on a shape of an attenuation function.

According to an embodiment, the wearable device 101 may obtain second haptic pattern information 183-2 by using the first haptic pattern information 183-1. The second haptic pattern information 183-2 may be obtained based on a point of the one or more external electronic devices 190. For example, the wearable device 101 may identify the second haptic pattern information 183-2 mapped to the first haptic pattern information 183-1. For example, the wearable device 101 may identify the second haptic pattern information 183-2 using a distance between the first point at which the event occurs and a second point of the one or more external electronic devices 190 and the first haptic pattern information 183-1. The second haptic pattern information 183-2 may be used for the one or more external electronic devices 190 positioned at the second point to output vibration. For example, the wearable device 101 may obtain the second haptic pattern information 183-2 corresponding to each of the one or more external electronic devices 190 disposed at a plurality of points, by using the first haptic pattern information 183-1 obtained based on one event. For example, the wearable device 101 may obtain the haptic rendering information 183 based on execution of the vibration output control manager 154. However, it is not limited thereto.

For example, the wearable device 101 may obtain the second haptic pattern information 183-2 to be transmitted to an external electronic device including the actuator corresponding to the second type, by using the first haptic pattern information 183-1 based on the second type (e.g., the tactile feedback-type). For example, the wearable device 101 may obtain the second haptic pattern information 183-2 by changing time when vibration identified using the first haptic pattern information 183-1 is outputted. The wearable device 101 may obtain the second haptic pattern information 183-2 by using the first haptic pattern information 183-1 and a designated function (e.g., an amplitude modulation function). For example, the wearable device 101 may obtain the second haptic pattern information 183-2 from the first haptic pattern information 183-1 by using information indicating a sine wave having periodicity or information indicating a square wave. However, it is not limited thereto.

For example, in a case of identifying an event related to the first type, the wearable device 101 may transmit the second haptic pattern information 183-2 obtained from the first haptic pattern information 183-1 to an external electronic device having the actuator corresponding to the first type. The wearable device 101 may transmit the second haptic pattern information 183-2 to an external electronic device positioned in a designated range from the first point at which the event occurs. However, it is not limited thereto.

For example, the wearable device 101 may output a sound signal representing a vibration notification. The wearable device 101 may may provide the vibration notification to the user using an actuator included in an external electronic device together with outputting a sound signal using a speaker (not illustrated).

Referring to FIG. 1B, the wearable device 101 may establish a connection with the one or more external electronic devices 190 and/or the server 109 based on a wired network and/or a wireless network. The wired network may include a network such as Internet, a local area network (LAN), a wide area network (WAN), Ethernet, or a combination thereof. The wireless network may include a network such as long term evolution (LTE), 5g new radio (NR), wireless fidelity (WiFi), Zigbee, near field communication (NFC), Bluetooth, Bluetooth low-energy (BLE), or a combination thereof. Although the wearable device 101, the one or more external electronic devices 190, or the server 109 has been illustrated to be directly connected, the wearable device 101, the one or more external electronic devices 190, or the server 109 may be indirectly connected through an intermediate node in the network.

According to an embodiment, the one or more external electronic devices 190 may be wearable devices that may be worn by the user. The user may mean a person wearing an electronic device (or a wearable device). At least one of the one or more external electronic devices 190 may be formed in a shape of a ring. The at least one housing may be formed in the shape of the ring that may be worn on a finger of the user. For example, the at least one of the one or more external electronic devices 190 may be formed in a shape of a glove that may be worn on the hand of the user. For example, at least one of the one or more external electronic devices 190 may include a user input device (e.g., a controller). A shape and/or a hardware configuration of the one or more external electronic devices 190 are not limited to illustration of FIG. 1B.

Referring to FIG. 1B, according to an embodiment, a first external electronic device 103 of the one or more external electronic devices 190 may include at least one of communication circuitry 135-1, memory 115-1, or an actuator 137. In the first external electronic device 103, the communication circuitry 135-1, the memory 115-1, and the actuator 137 may be electronically and/or operably coupled through a communication bus 102-1. The communication circuitry 135-1, the memory 115-1, and a position tracker 171-1 may include a hardware component and/or a circuit corresponding to the position tracker 171, the memory 115, and the communication circuitry 135 of the wearable device 101. Hereinafter, overlapping content may be omitted.

According to an embodiment, the first external electronic device 103 may include an actuator 137 for generating vibration. The actuator 137 may include an eccentric rotating mass (ERM) and/or a linear resonant actuator (LRA). In an embodiment in which the actuator 137 includes the ERM, the actuator 137 may generate the vibration by repeatedly moving based on a plurality of axes (e.g., at least two axes among an x-axis, a y-axis, or a z-axis of FIG. 2A) in a coordinate space. In an embodiment in which the actuator 137 includes the LRA, the haptic actuator 137 may generate vibration by repeatedly moving based on a single axis in the coordinate space. In a state in which the haptic actuator 137 vibrates a housing of the electronic device 101, the vibration of the housing may generate a sound (hereinafter, a friction sound) based on friction between the housing and an external object. In a state in which the actuator 137 vibrates a housing of the first external electronic device 103, a user wearing the first external electronic device 103 may recognize haptic feedback based on the vibration of the housing. The first external electronic device 103 may output the vibration by controlling the actuator 137, by using second haptic pattern information 182-2 received from the wearable device 101. The number of actuators 137 included in the first external electronic device 103 may be one or more. At least one of the one or more external electronic devices 190 may include hardware and/or software included in the first external electronic device 103. Hereinafter, an overlapping description may be omitted.

According to an embodiment, the server 109 may include at least one of a processor 110-2, memory 115-2, or communication circuitry 135-2. In the server 109, the processor 110-2, the memory 115-2, and the communication circuitry 135-2 may be electronically and/or operably coupled through a communication bus 102-2. The processor 110-2, the memory 115-2, and the communication circuitry 135-2 included in the server 109 may include a hardware component, a circuit, and/or one or more programs corresponding to the processor 110, the memory 115, and the communication circuitry 135 of the wearable device 101. Hereinafter, overlapping content may be omitted. The wearable device 101 may be referred to as a master device in terms of controlling to output vibration using the one or more external electronic devices 190. The one or more external electronic devices 190 may be referred to as slave devices in terms of receiving an instruction indicating an output on the vibration from the wearable device 101.

As described above, in a state of being connected to the one or more external electronic devices 190, according to an embodiment, the wearable device 101 may provide haptic feedback corresponding to an event that occurs in the virtual space, by using the one or more external electronic devices 190. The wearable device 101 may identify a pattern of the haptic feedback to be outputted from the one or more external electronic devices 190 based on a point at which the event occurs and a point of each of the one or more external electronic devices 190. The wearable device 101 may display a visual object (or a graphic effect) on a display while providing the haptic feedback by controlling the one or more external electronic devices 190. The wearable device 101 may provide spatial haptic feedback using a distance between the point at which the event occurs and the point of the one or more external electronic devices 190.

FIG. 2A illustrates an example of a perspective view of a wearable device according to an embodiment. According to an embodiment, a wearable device 101 may have a form of glasses that is wearable on a body part (e.g., head) of a user. The wearable device 101 of FIGS. 2A to 2B may be an example of the electronic device 101 of FIG. 1A. The wearable device 101 may include a head-mounted display (HMD). For example, a housing of the wearable device 101 may include a flexible material such as rubber and/or silicone having a form closely attached to a portion of the user's head (for example, a portion of a face surrounding two eyes). For example, the housing of the wearable device 101 may include one or more straps able to be twined around the user's head, and/or one or more temples attachable to ears of the head.

Referring to FIG. 2A, according to an embodiment, the wearable device 101 may include at least one display 250 and a frame 200 supporting the at least one display 250.

According to an embodiment, the wearable device 101 may be wearable on a portion of the user's body. The wearable device 101 may provide augmented reality (AR), virtual reality (VR), or mixed reality (MR) combining the augmented reality and the virtual reality to a user wearing the wearable device 101. For example, the wearable device 101 may display a virtual reality image provided from at least one optical device 282 and 284 of FIG. 2B on at least one display 250, in response to a user's preset gesture obtained through a motion recognition camera 260-2 and 260-3 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide visual information transmitted through a lens included in the at least one display 250 from ambient light to a user and other visual information distinguished from the visual information2. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 101, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through ambient light, on a display area formed on the second surface 232.

In an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 101 to guide a screen displayed by the at least one display 250 to the user's eyes. For example, the screen may be transmitted to the user's eyes based on total internal reflection (TIR) generated in the at least one waveguide 233 and 234.

The wearable device 101 may analyze an object included in a real image collected through a photographing camera 260-4, combine with a virtual object corresponding to an object that becomes a subject of augmented reality provision among the analyzed object, and display on the at least one display 250. The virtual object may include at least one of text and images for various information associated with the object included in the real image. The wearable device 101 may analyze the object based on a multi-camera such as a stereo camera. For the object analysis, the wearable device 101 may execute space recognition (e.g., simultaneous localization and mapping (SLAM)) using the multi-camera and/or time-of-flight (ToF). The user wearing the wearable device 101 may watch an image displayed on the at least one display 250.

According to an embodiment, a frame 200 may be configured with a physical structure in which the wearable device 101 may be worn on the user's body. According to an embodiment, the frame 200 may be configured so that when the user wears the wearable device 101, the first display 250-1 and the second display 250-2 may be positioned corresponding to the user's left and right eyes. The frame 200 may support the at least one display 250. For example, the frame 200 may support the first display 250-1 and the second display 250-2 to be positioned at positions corresponding to the user's left and right eyes.

Referring to FIG. 2A, according to an embodiment, the frame 200 may include an area 220 at least partially in contact with the portion of the user's body in case that the user wears the wearable device 101. For example, the area 220 of the frame 200 in contact with the portion of the user's body may include an area in contact with a portion of the user's nose, a portion of the user's ear, and a portion of the side of the user's face that the wearable device 101 contacts. According to an embodiment, the frame 200 may include a nose pad 210 that is contacted on the portion of the user's body. When the wearable device 101 is worn by the user, the nose pad 210 may be contacted on the portion of the user's nose. The frame 200 may include a first temple 204 and a second temple 205, which are contacted on another portion of the user's body that is distinct from the portion of the user's body.

For example, the frame 200 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 101 may identify an external object (e.g., a user's fingertip) touching the frame 200 and/or a gesture performed by the external object by using a touch sensor, a grip sensor, and/or a proximity sensor formed on at least a portion of the surface of the frame 200.

According to an embodiment, the wearable device 101 may include hardware (e.g., hardware to be described later based on the block diagram of FIG. 2) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 200.

According to an embodiment, the microphone (e.g., the microphones 265-1, 265-2, and 265-3) of the wearable device 101 may obtain a sound signal, by being disposed on at least a portion of the frame 200. The first microphone 265-1 disposed on the bridge 203, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 101 is two or more, the wearable device 101 may identify a direction of the sound signal by using a plurality of microphones disposed on different portions of the frame 200.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 101 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 260-4, an eye tracking camera (ET CAM) 260-1, and/or the motion recognition camera 260-2 and 260-3. The photographing camera 260-4, the eye tracking camera 260-1, and the motion recognition camera 260-2 and 260-3 may be disposed at different positions on the frame 200 and may perform different functions. The eye tracking camera 260-1 may output data indicating a position of eye or a gaze of the user wearing the wearable device 101. For example, the wearable device 101 may detect the gaze from an image including the user's pupil obtained through the eye tracking camera 260-1. The wearable device 101 may identify an object (e.g., a real object, and/or a virtual object) focused by the user, by using the user's gaze obtained through the eye tracking camera 260-1. The wearable device 101 identifying the focused object may execute a function (e.g., gaze interaction) for interaction between the user and the focused object. The wearable device 101 may represent a portion corresponding to eye of an avatar indicating the user in the virtual space, by using the user's gaze obtained through the eye tracking camera 260-1. The wearable device 101 may render an image (or a screen) displayed on the at least one display 250, based on the position of the user's eye. For example, visual quality (e.g., resolution, brightness, saturation, grayscale, and PPI) of a first area related to the gaze within the image and visual quality of a second area distinguished from the first area may be different. The wearable device 101 may obtain an image having the visual quality of the first area matching the user's gaze and the visual quality of the second area by using foveated rendering. For example, when the wearable device 101 supports an iris recognition function, user authentication may be performed based on iris information obtained using the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 260-4 may photograph a real image or background to be matched with a virtual image in order to implement the augmented reality or mixed reality content. The photographing camera 260-4 may be used to obtain an image having a high resolution based on a high resolution (HR) or a photo video (PV). The photographing camera 260-4 may photograph an image of a specific object existing at a position viewed by the user and may provide the image to the at least one display 250. The at least one display 250 may display one image in which a virtual image provided through the at least one optical device 282 and 284 is overlapped with information on the real image or background including an image of the specific object obtained by using the photographing camera 260-4. The wearable device 101 may compensate for depth information (e.g., a distance between the wearable device 101 and an external object obtained through a depth sensor), by using an image obtained through the photographing camera 260-4. The wearable device 101 may perform object recognition through an image obtained using the photographing camera 260-4. The wearable device 101 may perform a function (e.g., auto focus) of focusing an object (or subject) within an image and/or an optical image stabilization (OIS) function (e.g., an anti-shaking function) by using the photographing camera 260-4. While displaying a screen representing a virtual space on the at least one display 250, the wearable device 101 may perform a pass through function for displaying an image obtained through the photographing camera 260-4 overlapping at least a portion of the screen. In an embodiment, the photographing camera 260-4 may be disposed on the bridge 203 disposed between the first rim 201 and the second rim 202.

The eye tracking camera 260-1 may implement a more realistic augmented reality by matching the user's gaze with the visual information provided on the at least one display 250, by tracking the gaze of the user wearing the wearable device 101. For example, when the user looks at the front, the wearable device 101 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 101 is positioned.

The motion recognition camera 260-2 and 260-3 may provide a specific event to the screen provided on the at least one display 250 by recognizing the movement of the whole or portion of the user's body, such as the user's torso, hand, or face. The motion recognition camera 260-2 and 260-3 may obtain a signal corresponding to motion by recognizing the user's motion (e.g., gesture recognition), and may provide a display corresponding to the signal to the at least one display 250. The processor may identify a signal corresponding to the operation and may perform a preset function based on the identification. The motion recognition camera 260-2 and 260-3 may be used to perform simultaneous localization and mapping (SLAM) for 6 degrees of freedom pose (6 dof pose) and/or a space recognition function using a depth map. The processor may perform a gesture recognition function and/or an object tracking function, by using the motion recognition camera 260-2 and 260-3. In an embodiment, the motion recognition camera 260-2 and camera 260-3 may be disposed on the first rim 201 and/or the second rim 202.

The camera 260 included in the wearable device 101 is not limited to the above-described eye tracking camera 260-1 and the motion recognition camera 260-2 and 260-3. For example, the wearable device 101 may identify an external object included in the FoV by using a camera disposed toward the user's FoV. The wearable device 101 identifying the external object may be performed based on a sensor for identifying a distance between the wearable device 101 and the external object, such as a depth sensor and/or a time of flight (ToF) sensor. The camera 260 disposed toward the FoV may support an autofocus function and/or an optical image stabilization (OIS) function. For example, in order to obtain an image including a face of the user wearing the wearable device 101, the wearable device 101 may include the camera 260 (e.g., a face tracking (FT) camera) disposed toward the face.

Although not illustrated, the wearable device 101 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 200, and the hinge units 206 and 207.

According to an embodiment, the battery module 270 may supply power to electronic components of the wearable device 101. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

The antenna module 275 may transmit the signal or power to the outside of the wearable device 101 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

The speaker 255 may output a sound signal to the outside of the wearable device 101. A sound output module may be referred to as a speaker. In an embodiment, the speaker 255 may be disposed in the first temple 204 and/or the second temple 205 in order to be disposed adjacent to the ear of the user wearing the wearable device 101. For example, the speaker 255 may include a second speaker 255-2 disposed adjacent to the user's left ear by being disposed in the first temple 204, and a first speaker 255-1 disposed adjacent to the user's right ear by being disposed in the second temple 205.

The light emitting module (not illustrated) may include at least one light emitting element. The light emitting module may emit light of a color corresponding to a specific state or may emit light through an operation corresponding to the specific state in order to visually provide information on a specific state of the wearable device 101 to the user. For example, when the wearable device 101 requires charging, it may emit red light at a constant cycle. In an embodiment, the light emitting module may be disposed on the first rim 201 and/or the second rim 202.

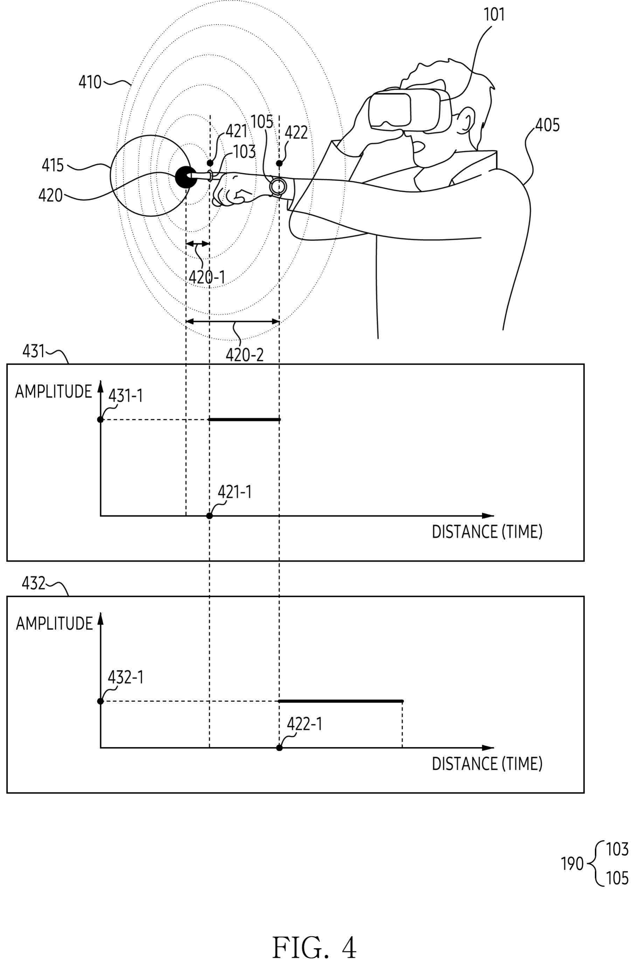

Referring to FIG. 2B, according to an embodiment, the wearable device 101 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by different blocks of FIG. 4) included in the wearable device 101 may be disposed. The wearable device 101 may include a flexible PCB (FPCB) for interconnecting the hardware.

According to an embodiment, the wearable device 101 may include at least one of a gyro sensor, a gravity sensor, and/or an acceleration sensor for detecting the posture of the wearable device 101 and/or the posture of a body part (e.g., a head) of the user wearing the wearable device 101. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 101 may identify the user's motion and/or gesture performed to execute or stop a specific function of the wearable device 101 based on the IMU.

FIGS. 3A to 3B illustrate an example of an exterior of a wearable device according to an embodiment. A wearable device 101 of FIGS. 3A to 3B may be an example of the wearable device 101 of FIG. 1A. According to an embodiment, an example of an exterior of a first surface 310 of a housing of the wearable device 101 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 101 may have an attachable shape on the user's body part (e.g., the user's face). Although not illustrated, the wearable device 101 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 101 may further include rubber or silicon packing, which are formed on the first surface 310, for preventing interference by light (e.g., ambient light) different from the light emitted from the first display 250-1 and the second display 250-2.

According to an embodiment, the wearable device 101 may include cameras 260-1 for photographing and/or tracking two eyes of the user adjacent to each of the first display 250-1 and the second display 250-2. The cameras 260-1 may be referred to as the gaze tracking camera 260-1 of FIG. 2B. According to an embodiment, the wearable device 101 may include cameras 260-5 and 260-6 for photographing and/or recognizing the user's face. The cameras 260-5 and 260-6 may be referred to as a FT camera. The wearable device 101 may control an avatar representing a user in a virtual space, based on a motion of the user's face identified using the cameras 260-5 and 260-6. For example, the wearable device 101 may change a texture and/or a shape of a portion (e.g., a portion of an avatar representing a human face) of the avatar, by using information obtained by the cameras 260-5 and 260-6 (e.g., the FT camera) and representing the facial expression of the user wearing the wearable device 101.

Referring to FIG. 3B, a camera (e.g., cameras 260-7, 260-8, 260-9, 260-10, 260-11, and 260-12), and/or a sensor (e.g., the depth sensor 330) for obtaining information associated with the external environment of the wearable device 101 may be disposed on the second surface 320 opposite to the first surface 310 of FIG. 3A. For example, the cameras 260-7, 260-8, 260-9, and 260-10 may be disposed on the second surface 320 in order to recognize an external object. The cameras 260-7, 260-8, 260-9, and 260-10 may be referred to as the motion recognition cameras 260-2 and 260-3 of FIG. 2B.

For example, by using cameras 260-11 and 260-12, the wearable device 101 may obtain an image and/or video to be transmitted to each of the user's two eyes. The camera 260-11 may be disposed on the second surface 320 of the wearable device 101 to obtain an image to be displayed through the second display 250-2 corresponding to the right eye among the two eyes. The camera 260-12 may be disposed on the second surface 320 of the wearable device 101 to obtain an image to be displayed through the first display 250-1 corresponding to the left eye among the two eyes. The cameras 260-11 and 260-12 may be referred to as the photographing camera 260-4 of FIG. 2B.

According to an embodiment, the wearable device 101 may include the depth sensor 330 disposed on the second surface 320 in order to identify a distance between the wearable device 101 and the external object. By using the depth sensor 330, the wearable device 101 may obtain spatial information (e.g., a depth map) about at least a portion of the FoV of the user wearing the wearable device 101. Although not illustrated, a microphone for obtaining sound outputted from the external object may be disposed on the second surface 320 of the wearable device 101. The number of microphones may be one or more according to embodiments.

FIG. 4 illustrates an example of an operation in which a wearable device according to an embodiment controls an external electronic device based on a distance between a point of an event and a point of an external electronic device. A wearable device 101 of FIG. 4 may include the wearable device 101 of FIGS. 1A to 3B.

Referring to FIG. 4, according to an embodiment, an exemplary state of establishing a connection between the wearable device 101 and one or more external electronic devices 190 is illustrated. The wearable device 101 may be worn by a user 405. Among the one or more external electronic devices 190, a first external electronic device 103 and a second external electronic device 105 may be worn on at least one (e.g., a finger or a wrist) of body parts of the user 405. The wearable device 101 may transmit a signal for establishing a communication link to the one or more external electronic devices 190 through communication circuitry. The wearable device 101 may identify the first external electronic device 103 and the second external electronic device 105 that transmit a response signal to the wearable device 101 in response to the signal. The wearable device 101 may receive position information of the first external electronic device 103 and the second external electronic device 105. The wearable device 101 may identify a first body part (e.g., the finger) of the user 405 on which the first external electronic device 103 is worn and a second body part (e.g., the wrist) of the user 405 on which the second external electronic device 105 is worn. The wearable device 101 may receive actuator information of the first external electronic device 103 and actuator information of the second external electronic device 105. For example, the wearable device 101 may identify initial points of the first external electronic device 103 and the second external electronic device 105 based on a pose of the user 405 identified from a sensor. The wearable device 101 may track the points of the first external electronic device 103 and the second external electronic device 105 while establishing the communication link. The points of the first external electronic device 103 and the second external electronic device 105 may be obtained from the first external electronic device 103 and the second external electronic device 105 through the communication circuitry. The points of the first external electronic device 103 and the second external electronic device 105 may be identified through an image obtained through a camera of the wearable device 101. However, it is not limited thereto.

Referring to FIG. 4, an example in which the wearable device 101 according to an embodiment identifies an event that occurs at a first point 420 is illustrated. According to an embodiment, the electronic device 101 may identify an event related to an output on vibration using an actuator 137. The event may occur by a request of an application (e.g., the XR application 442 of FIG. 1A) installed in the wearable device 101. The event may occur by reception a notification message transmitted from a server (e.g., a server that provides XR) connected to the wearable device 101. The event may occur based on identification of interaction between a body part of the user identified through a camera and a virtual object displayed on a display. The event may occur by a call of a designated application programming interface (API) provided by an operating system (e.g., Android) of the wearable device 101. For example, the designated API may be called by at least one of the request of the application, the identification of the interaction, and/or the reception of the notification message.

For example, the wearable device 101 may display, on the display, a graphic effect 410 spreading in a virtual space based on the first point, in response to an event that occurs at the first point 420 and causes an output on vibration. The graphic effect 410 may be identified based on first haptic pattern information. The graphic effect 410 displayed by the wearable device 101 may be increased in size based on the first point 420. The wearable device 101 may display the graphic effect 410 that visually representing the vibration on the display. The graphic effect 410 may be referred to as visual guidance, a visual object, a visual effect, a UI element, and/or a view element in terms of representing vibration. The wearable device 101 may display the graphic effect 410 that moves from the first point 420 to an entire virtual space for designated time on the display. The wearable device 101 may adjust a sync between a time point at which the graphic effect 410 intersects a point of an external electronic device and a time point at which the external electronic device outputs vibration. The point of the external electronic device may be referred to as a haptic rendering point (HRP) or a haptic output point (HOP) in terms of a point at which the vibration is outputted.

For example, the wearable device 101 may obtain the first haptic pattern information (e.g., the first haptic pattern information 183-1 of FIG. 1A) based on identifying the event that occurs at the first point 420. The event may occur by interaction between the body part of the user 405 and the virtual object 415. The wearable device 101 may obtain the first haptic pattern information based on information on the virtual object 415 and a type of the interaction (e.g., contact). The wearable device 101 may obtain second haptic pattern information (e.g., the second haptic pattern information 183-2 of FIG. 1A) corresponding to each of the one or more external electronic devices 190 from the first haptic pattern information based on actuator information of the one or more external electronic devices 190, user perception information (e.g., the user perception information 181 of FIG. 1A), and/or a point of each of the one or more external electronic devices 190.

For example, the wearable device 101 may identify a distance 420-1 between the first point 420 and a second point 421 (e.g., a haptic rendering point (HRP) or a haptic output point (HOP)) of the first external electronic device 103. The wearable device 101 may obtain second haptic pattern information 431 corresponding to the first external electronic device 103 from the first haptic pattern information based on the distance 420-1. A graph indicating a haptic pattern included in the second haptic pattern information 431 is not limited to those illustrated in FIG. 4. As an example, the graph may have a shape of a sine wave and/or a shape of a square wave. The wearable device 101 may identify a time point 421-1 at which at least a portion of the graphic effect 410 intersects the second point 421 based on the distance 420-1. The wearable device 101 may identify a pattern, an intensity, and/or vibration time of vibration outputted by the first external electronic device 103 by using the second haptic pattern information corresponding to the first external electronic device 103. The wearable device 101 may identify the intensity of the vibration based on the distance 420-1. For example, the wearable device 101 may obtain the second haptic pattern information including a lower vibration intensity as the second point 421 moves away from the first point 420. For example, a vibration intensity corresponding to the second haptic pattern information may be smaller than a vibration intensity corresponding to the first haptic pattern information. However, it is not limited thereto.

For example, the wearable device 101 may transmit, through the communication circuitry, a signal to the first external electronic device 103 to control an actuator of the first external electronic device 103 so that vibration is outputted at the time point 421-1. The signal may include the second haptic pattern information 431 corresponding to the first external electronic device 103. The first external electronic device 103 may output the vibration corresponding to the second haptic pattern information 431 at the time point 421-1 by controlling the actuator. By using the second haptic pattern information 431, the first external electronic device 103 may output vibration having a first vibration intensity 431-1, by controlling the actuator. The first external electronic device 103 may output the vibration for a designated time. The designated time may include time when the moving graphic effect 410 is included in an area corresponding to the point 421. The designated time may be identified by wearable device 101. However, it is not limited thereto.

For example, the wearable device 101 may identify a distance 420-12 between the first point 410 and a third point 422 (e.g., the haptic rendering point, HRP, or the haptic output point, HOP) of the second external electronic device 105. The wearable device 101 may obtain second haptic pattern information 432 corresponding to the second external electronic device 105 from the first haptic pattern information based on the distance 420-2. The wearable device 101 may identify a time point 422-1 at which at least a portion of the graphic effect 410 matches the third point 421 based on the distance 420-2. The wearable device 101 may identify a pattern, an intensity, and/or vibration time of vibration to be outputted from the second external electronic device 105, using the second haptic pattern information corresponding to the second external electronic device 105. The wearable device 101 may identify the vibration intensity based on the distance 420-2. For example, the wearable device 101 may obtain the second haptic pattern information including a lower vibration intensity as the third point 422 moves away from the first point 420. For example, in a case that the distance 420-2 is longer than the distance 420-1, the vibration intensity corresponding to the second haptic pattern information corresponding to the second external electronic device 105 may be smaller than the vibration intensity corresponding to the second haptic pattern information corresponding to the first external electronic device 103. However, it is not limited thereto. As an example, the vibration intensity may be changed according to a type of an event.

For example, the wearable device 101 may transmit, through the communication circuitry, a signal to the second external electronic device 105 to control an actuator of the second external electronic device 105 so that vibration is outputted at the time point 422-1. The signal may include the second haptic pattern information 432 corresponding to the second external electronic device 105. The second external electronic device 105 may output the vibration corresponding to the second haptic pattern information 432 at the time point 422-1 by controlling the actuator. The second external electronic device 105 may output vibration having a second vibration intensity 432-1, using the second haptic pattern information 432 by controlling the actuator. The first external electronic device 103 may output the vibration for a designated time. The wearable device 101 may identify the designated time included in an area in which the graphic effect 410 corresponds to the point 422. However, it is not limited thereto.

The wearable device 101 according to an embodiment may transmit a signal for controlling the actuator to the first external electronic device 103 and the second external electronic device 105 at a substantially similar transmission time point. The transmission time point may be before the time points 421-1 and 422-1. The first external electronic device 103 receiving the signal may output the vibration at the time point 421-1, and the second external electronic device 105 may output the vibration at the time point 422-1. The time points 421-1 and 422-1 may be identified in proportion to a distance. As an example, the wearable device 101 may identify the time points 421-1 and 422-1, using delay time taken for the one or more wearable devices 190 to control an actuator.

According to an embodiment, the wearable device 101 may transmit a signal causing an output on vibration to at least one of the one or more wearable devices 190 based on the first haptic pattern information. In a case of identifying the first haptic pattern information corresponding to a first type (e.g., a force feedback-type), the wearable device 101 may transmit the signal to an external electronic device having a type corresponding to the first type. In a case of identifying the first haptic pattern information corresponding to the first type, the wearable device may temporarily refrain from transmitting the signal to an external electronic device having a type corresponding to a second type (e.g., a tactile feedback-type). However, it is not limited thereto. For example, the wearable device 101 may transmit the signal to the external electronic device having the type corresponding to the second type by changing the first haptic pattern information corresponding to the first type to the second haptic pattern information corresponding to the second type.

For example, the wearable device 101 may acoustically indicate the vibration through a speaker (not illustrated). For example, the wearable device 101 may output an audio signal indicating the vibration corresponding to the second haptic pattern information 431 or 432 through the speaker. However, it is not limited thereto.

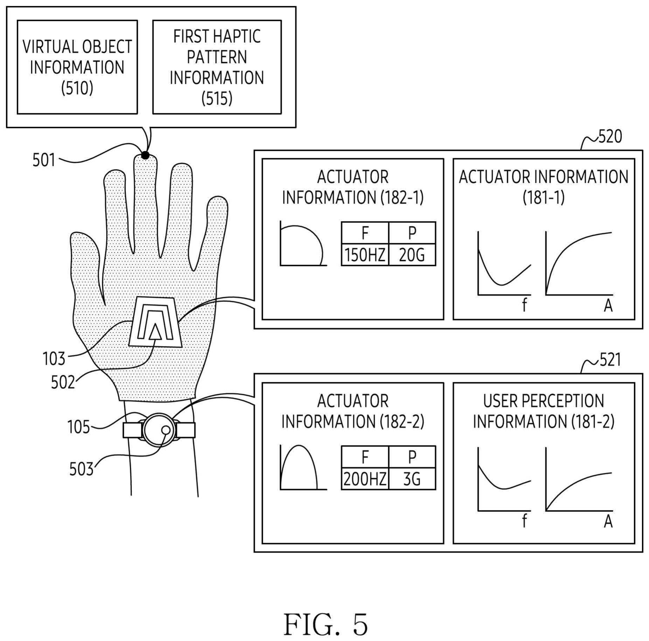

As described above, according to an embodiment, the wearable device 101 may provide haptic feedback by being linked with the one or more external electronic devices 190 based on identifying an event. The wearable device 101 may provide spatial haptic feedback to the user, using the haptic feedback outputted from the one or more external electronic devices 190 together with the graphic effect 410 displayed on the display. Hereinafter, an example of an operation in which the wearable device 101 obtains the second haptic pattern information from the first haptic pattern information will be described later with reference to FIG. 5.

FIG. 5 illustrates an example of an operation in which a wearable device according to an embodiment controls an external electronic device based on an event. An electronic device 101 of FIG. 5 may include the electronic device 101 of FIGS. 1A to 4. One or more external electronic devices 190 of FIG. 5 may be referred to one or more external electronic devices 190 of FIG. 1B.

According to an embodiment, the wearable device 101 may identify an event that occurs at a first point 501 separated from the wearable device 101. The wearable device 101 may identify an event that causes an output on vibration. The wearable device 101 may identify an event indicating interaction (e.g., contact) between a body part of a user and a virtual object. The wearable device 101 may obtain first haptic pattern information 515 based on identifying the event. The first haptic pattern information 515 may be referred to the first haptic pattern information 183-1 of FIG. 1A. The wearable device 101 may identify virtual object information 510 indicating a characteristic of the virtual object related to the event. The wearable device 101 may identify the first haptic pattern information 515 based on the virtual object information 510, and a type (e.g., contact or collision) of the interaction.

For example, the wearable device 101 may identify the one or more external electronic devices 190 included in a designated range from the first point 501 based on identifying the event that occurs at the first point 501. The designated range may include a range set to output vibration by the event occurring at the first point 501. A second point 502 and a third point 503 may be included in the designated range.

For example, the wearable device 101 may identify a first external electronic device 103 and a second external electronic device 105 worn by the user. The wearable device 101 may identify the second point 502 of the first external electronic device 103 and the third point 503 of the second external electronic device 105. Based on identifying the second point 502 and the third point 503, the wearable device 101 may obtain second haptic pattern information 520 of the first external electronic device 103 and second haptic pattern information 521 of the second external electronic device 105 by using the first haptic pattern information 515.

For example, the wearable device 101 may obtain the second haptic pattern information 520 of the first external electronic device 103 using the first haptic pattern information 515 based on a distance between the first point 501 and the second point 502. The wearable device 101 may identify actuator information 182-1 and user perception information 181-1 corresponding to the first external electronic device 103. The user perception information 181-1 corresponding to the first external electronic device 103 may include perception information on a body part of the user wearing the first external electronic device 103. The user perception information 181-1 corresponding to the first external electronic device 103 may include information indicating sensitivity of touch sensation that the user may detect according to a frequency. The user perception information 181-1 corresponding to the first external electronic device 103 may include information indicating sensitivity of touch sensation that the user may detect according to an amplitude. For example, the actuator information 182-1 corresponding to the first external electronic device 103 may include information indicating a type of an actuator included in the first external electronic device 103. The actuator information 182-1 corresponding to the first external electronic device 103 may include information indicating a frequency of vibration capable of outputting by the actuator and/or an intensity of a force. However, it is not limited thereto.

For example, by using the first haptic pattern information 515, the wearable device 101 may obtain the second haptic pattern information 520 using the distance between the first point 501 and the second point 502, the actuator information 182-1 corresponding to the first external electronic device 103 and the user perception information 181-1. The wearable device 101 may transmit, to the first external electronic device 103, a signal requesting to output vibration at a designated time point, using the second haptic pattern information 520. The designated time point may include a time point at which a visual object (e.g., a graphic effect) occurring from the first point 501 reaches the second point 502.

For example, the wearable device 101 may obtain second haptic pattern information 521 of the second external electronic device 105 using the first haptic pattern information 515 based on a distance between the first point 501 and the third point 503. The wearable device 101 may identify actuator information 182-2 and user perception information 181-2 corresponding to the first second external electronic device 105. The user perception information 181-2 corresponding to the second external electronic device 105 may include perception information on a body part (e.g., a wrist) of the user wearing the second external electronic device 105. The user perception information 181-2 corresponding to the second external electronic device 105 may include information indicating sensitivity of touch sensation that the user may detect according to a frequency and/or an amplitude. For example, the actuator information 182-2 corresponding to the second external electronic device 105 may include information indicating a type of an actuator included in the second external electronic device 105. The actuator information 182-2 corresponding to the second external electronic device 105 may include a range of a frequency that the second external electronic device 105 may output by controlling the actuator and/or an intensity of a force. However, it is not limited thereto.

For example, by using the first haptic pattern information 515, the wearable device 101 may obtain the second haptic pattern information 521 using the distance between the first point 501 and the third point 503, the actuator information 182-2 corresponding to the second external electronic device 105 and/or the user perception information 181-2. The wearable device 101 may transmit, to the second external electronic device 105, a signal requesting to output vibration at a designated time point, using the second haptic pattern information 521. The designated time point may include a time point included an area in which a visual object (e.g., a graphic effect) occurring from the first point 501 corresponds to the third point 503.

For example, the wearable device 101 may identify a first distance between the first point 501 and the second point 502 and a second distance between the first point 501 and the third point 503. The first distance may be shorter than the second distance. The wearable device 101 may identify a first time point for the first external electronic device 103 disposed at the second point 502 to output the vibration, and a second time point for the second external electronic device 105 disposed at the third point 503 to output the vibration. The first time point may be earlier than the second time point. The wearable device 101 is

According to an embodiment, the wearable device 101 may identify at least one external electronic device for causing an output on vibration among the one or more external electronic devices 190 based on identifying the event occurring at the first point 501. For example, the wearable device 101 may transmit a signal requesting an output on vibration to the first external electronic device 103 among the first external electronic device 103 and the second external electronic device 105. The wearable device 101 may at least temporarily refrain from transmitting a signal requesting an output on vibration to the second external electronic device 105 among the first external electronic device 103 and the second external electronic device 105. The wearable device 101 may select at least one external electronic device for outputting vibration among the one or more external electronic devices 190, based on identifying the event. As an example, in a case that the event causes an output on vibration corresponding to a first type (e.g., a force feedback-type), the wearable device 101 may select at least one external electronic device including an actuator having the first type. For example, in a case that information of a virtual object or a type of interaction is related to the first type, the first haptic pattern information 183-1 may include haptic pattern information corresponding to the first type.

According to an embodiment, the wearable device 101 may change the second haptic pattern information 520 based on the actuator information 182-1 based on identifying the first haptic pattern information 515. For example, the wearable device 101 may identify a perception strength state corresponding to the second point 502. The perception strength state may be set by the user. The perception intensity state may include a first state for outputting vibration based on a predetermined constant, a second state for sequentially reducing a vibration intensity, and/or a third state for outputting vibration based on a maximum output. The wearable device 101 may obtain the second haptic pattern information 520 corresponding to the second point 502, based on the perception strength state. However, the present invention is not limited thereto.

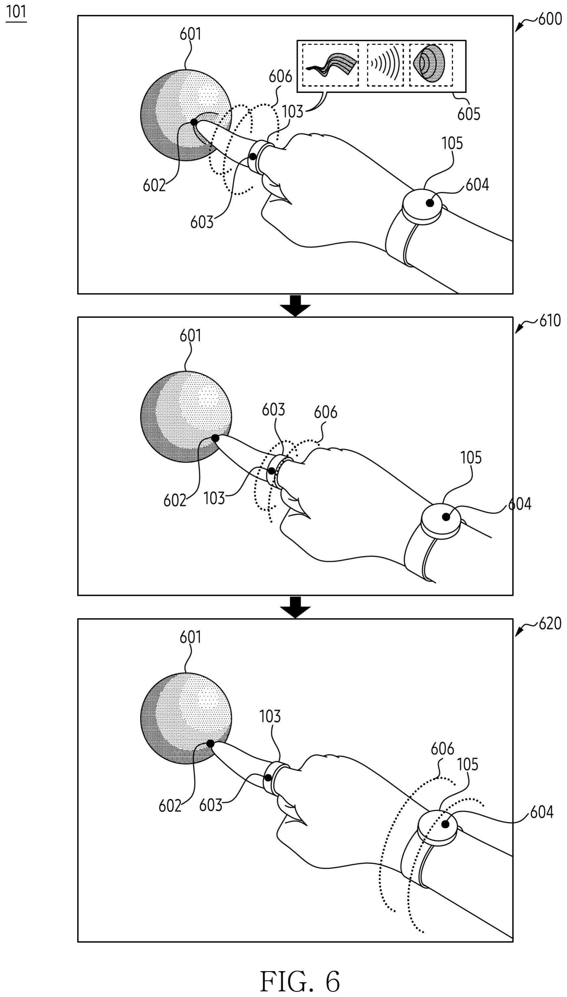

Hereinafter, an example of an operation in which the wearable device 101 displays a graphic effect related to an event will be described later with reference to FIG. 6.

FIG. 6 illustrates an example of a graphic effect displayed based on an event by a wearable device according to an embodiment. A wearable device 101 of FIG. 6 may be included in the wearable device 101 of FIGS. 1A to 5. A first external electronic device 103 and/or a second external electronic device 105 of FIG. 6 may be included in the one or more external electronic devices 190 of FIG. 1B.

Referring to FIG. 6, in a state 600, according to an embodiment, the wearable device 101 may identify interaction between a virtual object 601 and a body part. The wearable device 101 may identify a first point 602 at which the interaction with the virtual object 601 is performed. The wearable device 101 may display a graphic effect 606 occurring from the first point 602 on a display based on identifying the first point 602. The graphic effect 606 may be an example of a visual object representing vibration. The graphic effect 606 may indicate a visual effect set to spread throughout an entire virtual space. The wearable device 101 may display the graphic effect 606 that increases in size on the display. Since the wearable device 101 displays the graphic effect 606 visually representing the vibration, it may change the graphic effect 606 based on haptic rendering information (e.g., the haptic rendering information 183 of FIG. 1A). For example, the wearable device 101 may identify second haptic pattern information (e.g., the second haptic pattern information 183-2 of FIG. 1A) having a second vibration intensity smaller than a first vibration intensity corresponding to first haptic pattern information (e.g., the first haptic pattern information 183-1 of FIG. 1A). The wearable device 101 may display a graphic effect that decreases in size based on the second haptic pattern information on the display. However, it is not limited thereto. The wearable device 101 may display the graphic effect 606 having at least one shape among visual objects 650 based on an event.

According to an embodiment, the wearable device 101 may identify a second point 603 of the first external electronic device 103 and a third point 604 of the second external electronic device 105 based on identifying of interaction. The wearable device 101 may identify a first distance between the first point 602 and the second point 603. The wearable device 101 may identify a second distance between the first point 602 and the third point 604. Based on identifying the first distance and/or the second distance, the wearable device 101 may identify a first time point and/or a second time point to output vibration by controlling the first external electronic device 103 and/or the second external electronic device 105.

For example, after identifying the interaction, the wearable device 101 may display the graphic effect 606 moving in the virtual space on the display based on a designated period. The wearable device 101 may identify a third time point and/or a fourth time point at which the moving graphic effect 606 reaches the second point 603 and/or the third point 604 based on identifying of the first distance and/or the second distance.

For example, the wearable device 101 may map the first time point to output the vibration by controlling the first external electronic device 103 and the third time point at which the graphic effect 606 reaches the second point 603. In a state 610, the wearable device 101 may transmit, to the first external electronic device 103, a signal for controlling the actuator of the first external electronic device 103 so that the vibration is outputted at the first time point (or the mapped third time point). The wearable device 101 may transmit, to the first external electronic device 103, the signal causing to output the vibration while at least a portion of the graphic effect 606 is included in an area corresponding to the second point 603. Based on transmitting the signal, the wearable device 101 may output the vibration by tactually controlling the first external electronic device 103 while visually representing the vibration using the graphic effect 606 by being linked with the first external electronic device 103.

For example, the wearable device 101 may map the second time point to output the vibration by controlling the second external electronic device 105 and the fourth time point at which the graphic effect 606 reaches the third point 604. For example, in a state 620, the wearable device 101 may transmit, to the second external electronic device 105, a signal for controlling the actuator of the second external electronic device 105 so that the vibration is outputted at the second time point (or the mapped fourth time point). The wearable device 101 may transmit, to the second external electronic device 105, the signal causing to output the vibration while at least a portion of the graphic effect 606 is included in an area corresponding to the third point 604.

As described above, according to an embodiment, the wearable device 101 may display the graphic effect 606 that represents the vibration and spreads throughout the entire virtual space on the display, based on identifying an event causing the vibration that occurs from the first point 601. The wearable device 101 may identify a vibration output time point of one or more external electronic devices by being linked with the graphic effect 606. The wearable device 101 may provide synesthetic haptic feedback to the user based on visually representing the vibration using the graphic effect 606 and tactually controlling the one or more external electronic devices.

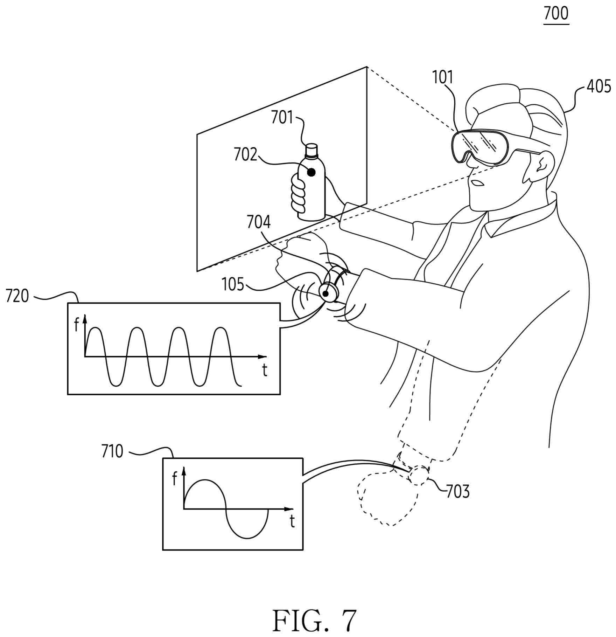

FIG. 7 illustrates an example of a change in a vibration intensity outputted from an external electronic device according to an embodiment. A wearable device 101 of FIG. 7 may include the wearable device 101 of FIGS. 1A to 6. A second external electronic device 105 of FIG. 7 may be included in the one or more external electronic devices 190 of FIG. 1B.

Referring to FIG. 7, in a state 700, according to an embodiment, the wearable device 101 may identify interaction between a virtual object 701 displayed through a display and a body part of a user 405. The wearable device 101 may identify a first point 702 at which the interaction is identified. The wearable device 101 may generate first haptic pattern information (e.g., the first haptic pattern information 183-1 of FIG. 1A), based on information of the virtual object 701 based on identifying the interaction. The information on the virtual object 701 may be obtained based on a dynamics engine. For example, the wearable device 101 may obtain the first haptic pattern information while the interaction between the virtual object 701 and the body part is maintained.

For example, the wearable device 101 may identify a first distance between the first point 702 and a second point 703 of the second external electronic device 105. The wearable device 101 may obtain second haptic pattern information 710 based on identifying the first distance. The wearable device 101 may obtain the second haptic pattern information 710 by using the first haptic pattern information obtained while the interaction is maintained.

For example, the wearable device 101 may transmit, to the second external electronic device 105, a signal requesting to output vibration by controlling an actuator based on the second haptic pattern information 710. The second external electronic device 105 may output the vibration based on the second haptic pattern information 710.

According to an embodiment, the wearable device 101 may track a point of the second external electronic device 105. The wearable device 101 may track the second external electronic device 105 moving from the second point 703 to a third point 704. For example, the wearable device 101 may identify the second external electronic device 105 approaching the virtual object 701. The wearable device 101 may identify a second distance between the third point 704 and the first point 702. The wearable device 101 may obtain second haptic pattern information 720 using the first haptic pattern information obtained while the interaction is maintained based on the second distance. The second distance between the first point 702 and the third point 704 may be shorter than the first distance between the first point 702 and the second point 703. The wearable device 101 may obtain the second haptic pattern information 720 having a frequency higher than a frequency of the second haptic pattern information 710. The wearable device 101 may transmit a signal indicating the second haptic pattern information 720 to the second external electronic device 105. The second external electronic device 105 may output vibration by controlling an actuator based on the second haptic pattern information 720.

For example, in a case of identifying the point of the second external electronic device 105 moves away from the virtual object 701, the wearable device 101 may obtain second haptic pattern information having a frequency lower than a frequency of the second haptic pattern information 710. However, it is not limited thereto.

As described above, the wearable device 101 may adjust an intensity of vibration to be outputted from an external electronic device based on movement of the external electronic device while interaction between a virtual object and the user is maintained.

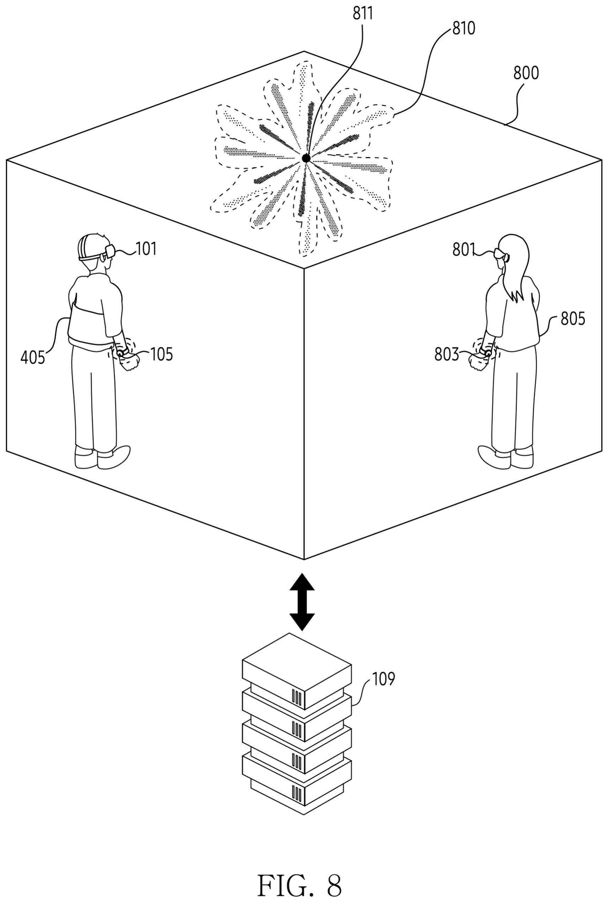

FIG. 8 illustrates an example of a virtual space including a plurality of wearable devices according to an embodiment. A wearable device 101 of FIG. 8 may include the wearable device 101 of FIGS. 1A to 7. Referring to FIG. 8, an example of a server 109 providing a virtual space 800 to which a plurality of users 405 and 805 are logged in is illustrated. The server 109 may correspond to the server 109 of FIG. 1B.

Referring to FIG. 8, according to an embodiment, the server 109 may identify occurrence of an event 810 at a first point 811 in the virtual space 800. The server 109 may identify the plurality of users 405 and 805 positioned in the virtual space 800, based on identifying the event 810. The server 109 may transmit a signal for displaying a graphic effect indicating the event 810 on displays of the first wearable device 101 and a second wearable device 801 to the first wearable device 101 and the second wearable device 801.

For example, the server 109 may identify electronic devices corresponding to each of the plurality of users 405 and 805. The server 109 may identify the first wearable device 101 and an first external electronic device 105 corresponding to the first user 405 among the plurality of users 405 and 805. The server 109 may identify the second wearable device 801 and a second external electronic device 803 corresponding to the second user 805 among the plurality of users 405 and 805. The second wearable device 801 may be a terminal owned by the second user 805.

For example, the server 109 may identify first haptic pattern information (e.g., the first haptic pattern information 184-1 of FIG. 1B) that causes an output on vibration based on the event 810 occurring from the first point 811. The server 109 may identify a first distance between the first point 811 and a point of the first wearable device 101. The server 109 may identify a second distance between the first point 811 and a point of the first external electronic device 105. For example, the server 109 may identify a third distance between the first point 811 and a point of the second wearable device 801. The server 109 may identify a fourth distance between the first point 811 and a point of the second external electronic device 803.

For example, the server 109 may obtain second haptic pattern information (e.g., the second haptic pattern information 184-2 of FIG. 1B) from the first haptic pattern information, based on the first distance and/or the second distance. The server 109 may obtain the second haptic pattern information using user perception information (e.g., the user perception information 181-2 of FIG. 1B) corresponding to the first user 405. The server 109 may obtain the second haptic pattern information based on actuator information (e.g., the actuator information 182-2 of FIG. 1B) of the first external electronic device 105. However, it is not limited thereto.

For example, the server 109 may identify a time point for outputting vibration based on the first distance and/or the second distance. The server 109 may transmit a signal including the time point and the second haptic pattern information to the first wearable device 101. Based on receiving the signal, the first wearable device 101 may transmit another signal requesting an output on the vibration corresponding to the second haptic pattern information to the first external electronic device 105 at the time point.

For example, the server 109 may obtain second haptic pattern information (e.g., the second haptic pattern information 184-2 of FIG. 1B) from the first haptic pattern information based on the third distance and/or the fourth distance. The server 109 may obtain the second haptic pattern information using user perception information (e.g., the user perception information 181-2 of FIG. 1B) corresponding to the second user 805. The server 109 may obtain the second haptic pattern information based on actuator information (e.g., the actuator information 182-2 of FIG. 1B) of the second external electronic device 803. However, it is not limited thereto.

For example, the server 109 may identify a time point for outputting vibration based on the third distance and/or the fourth distance. The server 109 may transmit a signal including the time point and the second haptic pattern information to the second wearable device 801. Based on receiving the signal, the second wearable device 801 may transmit another signal requesting an output on the vibration corresponding to the second haptic pattern information to the second external electronic device 803 at the time point. For example, the server 109 may provide haptic rendering information corresponding to the event 810 identified in the virtual space to each of the plurality of electronic devices owned by the plurality of users 405 and 805.

For example, in a case that the first distance between the first point 811 and the first wearable device 101 and the second distance between the first point 811 and the second wearable device 801 are substantially the same, the server 109 may transmit a signal requesting to output vibration to the first wearable device 101 and the second wearable device 801 at the same time point.

According to an embodiment, the server 109 may transmit data (e.g., information of a virtual object) related to the event 810 to the first wearable device 101 and/or the second wearable device 801.

For example, the first wearable device 101 may obtain the first haptic pattern information related to the event 810 based on receiving the data. The wearable device 101 may identify a point of the first external electronic device 105, based on receiving the data. The first wearable device 101 may identify a distance between the point of the first external electronic device 101 and the first point 811 that the event 810 occurs. The first wearable device 101 may obtain the second haptic pattern information from the first haptic pattern information based on the distance. The first wearable device 101 may output the vibration by controlling at least a portion of the first external electronic device 105 using the second haptic pattern information.

FIG. 9 illustrates an example of a screen for adjusting a vibration intensity of an external electronic device according to an embodiment. A wearable device 101 of FIG. 9 may include the wearable device 101 of FIGS. 1A to 8. A first external electronic device 103, a second external electronic device 105, and/or a third external electronic device 107 may be included in the one or more external electronic devices 190 of FIG. 1B.

Referring to FIG. 9, according to an embodiment, in a state 900, the wearable device 101 may identify the one or more external electronic devices 190 worn by a user 405. The wearable device 101 may identify actuator information (e.g., the actuator information 182 of FIG. 1A) of the one or more external electronic devices 190. The wearable device 101 may identify a point of each of the one or more external electronic devices 190 worn by the user 405.

According to an embodiment, the wearable device 101 may receive a user input for adjusting an intensity of vibration outputted from the one or more external electronic devices 190. The wearable device 101 may display a user interface 910 on a display in response to the user input. The user interface 910 may be referred to as a calibration screen in terms of being used to adjust an intensity of the vibration. For example, while displaying the calibration screen, the wearable device 101 may enter a calibration mode (or state).

For example, the wearable device 101 may transmit a signal requesting an output on vibration to each of the one or more wearable devices 190. For example, the first external electronic device 103 may output vibration by controlling an actuator in response to the signal. Based on sequentially increasing an intensity of vibration, the first external electronic device 103 may output the vibration corresponding to the intensity.

For example, while the first external electronic device 103 outputs the vibration, the wearable device 101 may receive a user input for adjusting the intensity of the vibration. The wearable device 101 may display a visual object 915 indicating the intensity of the vibration on the display. The wearable device 101 may adjust the intensity of the vibration outputted from the first external electronic device 103, based on the user input. However, it is not limited thereto. As an example, the wearable device 101 may obtain user perception information indicating touch sensation detected by the user 405 while the first external electronic device 103 outputs the vibration. The wearable device 101 may obtain the user perception information based on designated information (e.g., a method of adjustment among psychophysical methodologies). According to an embodiment, the wearable device 101 may obtain user perception information corresponding to each of the one or more wearable devices 190. Hereinafter, among descriptions of the second external electronic device 105 and the third external electronic device 107, a description overlapping an operation of obtaining user perception information corresponding to the first external electronic device 103 may be omitted.

As described above, according to an embodiment, the wearable device 101 may obtain user perception information 181 different according to users. The wearable device 101 may obtain different haptic pattern information based on identification of the same event, using the user perception information 181 different according to the users.

FIG. 10 illustrates an example of a flowchart indicating an operation of a wearable device according to an embodiment. A wearable device of FIG. 10 may include the wearable device 101 of FIGS. 1A to 9. At least one of operations of FIG. 10 may be performed by the wearable device 101 of FIG. 1A. At least one of the operations of FIG. 10 may be controlled by the processor 110 of FIG. 1A. Each of the operations of FIG. 10 may be performed sequentially, but is not necessarily performed sequentially. For example, an order of each of the operations may be changed, and at least two operations may be performed in parallel.

In an operation 1010, according to an embodiment, a processor may display a graphic effect on a display in response to an event that occurs at a first point separated from the wearable device and causes an output on vibration. The graphic effect may be expanded in size toward an entire virtual space in which the wearable device is logged in. The graphic effect may be displayed to move from the first point to a point of the wearable device. However, it is not limited thereto. For example, the processor may display the graphic effect spreading from the first point to an external space. The external space may include a virtual space in which the wearable device is logged in. The external space in which the wearable device is positioned and the virtual space in which the wearable device is logged in may be mapped. For example, the wearable device may map position information in the external space and position information in the virtual space.

The processor may obtain first haptic pattern information indicating vibration related to an event.

In an operation 1020, according to an embodiment, the processor may identify a distance between the first point and a second point of an external electronic device separated from the wearable device. The processor may change the first haptic pattern information to second haptic pattern information based on the distance. The processor may obtain the second haptic pattern information based on the distance, a type of the external electronic device, and/or user perception information. The second haptic pattern information may be used for the external electronic device to control an actuator to output vibration.

In an operation 1030, according to an embodiment, based on identifying the distance, the processor may identify a time point at which at least a portion of the graphic effect intersects the second point. The processor may identify the time point at which the second point and at least a portion of the graphic effect intersect while extending a size of the graphic effect toward the entire virtual space based on the event.

In an operation 1040, according to an embodiment, the processor may transmit, through communication circuitry, to the external electronic device, a signal for controlling the actuator of the external electronic device so that the vibration is outputted at a time point. The processor may transmit the signal prior to the intersecting time point. After receiving the signal, the external electronic device may output the vibration (or haptic feedback) by controlling the actuator at the intersecting time point.

Metaverse is a compound word of the English words "Meta" meaning "virtual" and "transcendence" and "Universe" meaning cosmos, and refers to a three-dimensional virtual world in which social, economic, and cultural activities take place like a real world. Metaverse is a concept that has evolved one step further than a virtual reality (VR, cutting-edge technology that enables people to experience real-life experiences in a virtual world created by a computer), and it is characterized by using avatars to not only enjoy games or virtual reality, but also social and cultural activities like a reality. A metaverse service may provide media content for enhancing immersion in the virtual world, based on an augmented reality (AR), a virtual reality environment (VR), a mixed environment (MR), and/or an extended reality (XR).

For example, media content provided by the metaverse service may include social interaction content including avatar-based game, concert, party, and/or meeting. For example, the media content may include information for economic activities such as advertising, user created content, and/or sales and/or shopping of productions. Ownership of the user created content may be proved by a blockchain-based non-fungible token (NFT). The metaverse service may support economic activities based on real money and/or cryptocurrency. By the metaverse service, virtual content associated with the real world, such as digital twin or life logging, may be provided.

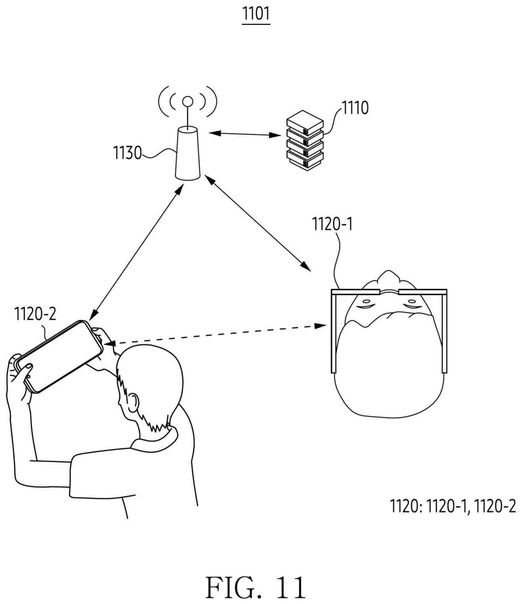

FIG. 11 is an exemplary diagram of a network environment 1101 in which a metaverse service is provided through a server 1110.

Referring to FIG. 11, a network environment 1101 may include a server 1110, a user terminal 1120 (e.g., a first terminal 1120-1 and a second terminal 1120-2), and a network connecting the server 1110 and the user terminal 1120. In the network environment 1101, the server 1110 may provide a metaverse service to the user terminal 1120. The network may be formed by at least one intermediate node 1130 including an access point (AP) and/or a base station. The user terminal 1120 may access the server 1110 through the network and output a user interface (UI) associated with a metaverse service to a user of the user terminal 1120. Based on the UI, the user terminal 1120 may obtain information to be inputted into the metaverse service from the user, or output information (e.g., multimedia content) associated with the metaverse service to the user.

In this case, the server 1110 provides a virtual space so that the user terminal 1120 may perform activities in the virtual space. In addition, the user terminal 1120 may represent information provided by the server 1110 to the user by installing an S/W agent to access the virtual space provided by the server 1110, or transmit information that the user wants to represent in the virtual space to the server. The S/W agent may be provided directly through the server 1110, downloaded from a public server, or embedded and provided when purchasing a terminal.

In an embodiment, the metaverse service may provide a service to the user terminal 1120 and/or a user by using the server 1110. The embodiment is not limited thereto, and the metaverse service may be provided through individual contacts between users. For example, in the network environment 1101, the metaverse service may be provided by a direct connection between the first terminal 1120-1 and the second terminal 1120-2, independently of the server 1110. Referring to FIG. 11, in the network environment 1101, the first terminal 1120-1 and the second terminal 1120-2 may be connected to each other through a network formed by at least one intermediate node 1130. In an embodiment in which the first terminal 1120-1 and the second terminal 1120-2 are directly connected, any one of the first terminal 1120-1 and the second terminal 1120-2 may perform a role of the server 1110. For example, a metaverse environment may be configured only with a device-to-device connection (e.g., a peer-to-peer (P2P) connection).

In an embodiment, the user terminal 1120 (or the user terminal 1120 including the first terminal 1120-1 and the second terminal 1120-2) may be made in various form factors, and it is characterized by including an output device for providing an image and/or sound to the user and an input device for inputting information into the metaverse service. An exemplary user terminal 1120 in various form factors may include a smartphone (e.g., the second terminal 1120-2), an AR device (e.g., the first terminal 1120-1), a VR device, an MR device, a Video See Through (VST) device, an Optical See Through (OST) device, a smart lens, a smart mirror, a TV capable of inputting and outputting, or a projector.

A network (e.g., a network formed by at least one intermediate node 1130) includes all of various broadband networks including 3G, 4G, and 5G and short-range networks (e.g., a wired network or a wireless network that directly connects the first terminal 1120-1 and the second terminal 1120-2) including Wi-Fi and BT.

According to an embodiment, a wearable device may tactually output vibration by being linked with a plurality of external electronic devices while representing the vibration using a visual object displayed on a display. A method in which the wearable device indicates the vibration using the visual object and the plurality of external electronic devices may be required.

As described above, according to an embodiment, in a wearable device 101, the wearable device may comprise communication circuitry 135, a display 120, at least one processor 110 including processing circuitry, and memory 115 storing comprising one or more storage media storing instructions. The instructions, when executed by the at least one processor individually or collectively, may cause the electronic device to display a graphic effect 410 or 606 spreading from a first point to an external space, on the display, in response to an event that occurs at the first point 420, 501, 602, or 702 separated from the wearable device and causes an output on vibration. The instructions, when executed by the at least one processor individually or collectively, may cause the electronic device to identify a distance 420-1 between the first point and a second point 420, 502, or 603 of an external electronic device separated from the wearable device. The instructions, when executed by the at least one processor individually or collectively, may cause the electronic device to identify a time point 421-1 at which at least a portion of the graphic effect intersects the second point based on identifying the distance. The instructions, when executed by the at least one processor individually or collectively, may cause the electronic device to transmit, through the communication circuitry, a signal for controlling an actuator of the external electronic device to output vibration having a magnitude determined based on the distance at the time point to the external electronic device.

For example, the instructions, when executed by the at least one processor individually or collectively, may cause the electronic device to obtain first haptic pattern information 183-1 indicating the vibration related to the event, based on identifying the event. The instructions, when executed by the at least one processor individually or collectively, may cause the electronic device to display the graphic effect on the display, based on the first haptic pattern information.

For example, the instructions, when executed by the at least one processor individually or collectively, may cause the electronic device to change the first haptic pattern information to second haptic pattern information 183-2 for controlling the actuator of the external electronic device based on at least one of a type of the external electronic device and the distance. The instructions, when executed by the at least one processor individually or collectively, may cause the electronic device to transmit, to the external electronic device, prior to the time point, the signal requesting to output the vibration based on the magnitude corresponding to the second haptic pattern information at the time point.

For example, the instructions, when executed by the at least one processor individually or collectively, may cause the electronic device to change the first haptic pattern information to the second haptic pattern information having a second vibration intensity smaller than a first vibration intensity corresponding to the first haptic pattern information, based on the distance.

For example, the instructions, when executed by the at least one processor individually or collectively, may cause the electronic device to identify the event indicating contact between at least one body part of a user of the wearable device and a virtual object 415 or 701 displayed on the display. The instructions, when executed by the at least one processor individually or collectively, may cause the electronic device to obtain the first haptic pattern information based on a type of the virtual object.

For example, the instructions, when executed by the at least one processor individually or collectively, may cause the electronic device to change the first haptic pattern information to the second haptic pattern information, based on user perception information 181 related to vibration.

For example, the user perception information may be obtained based on a user interface 910 for identifying an intensity of vibration generated by the external electronic device at a body part of a user wearing the external electronic device according to the type of the external electronic device.

For example, the instructions, when executed by the at least one processor individually or collectively, may cause the electronic device to transmit the signal causing the external electronic device to output vibration corresponding to the second haptic pattern information while at least a portion of the graphic effect is included in an area corresponding to the second point.

As described above, according to an embodiment, in a method of a wearable device 101, the method may comprise displaying a graphic effect 410 or 606 spreading from a first point to an external space, on a display 120, in response to an event that occurs at the first point 420, 501, 602, or 702 separated from the wearable device and causes an output on vibration. The method may comprise identifying a distance 420-1 between the first point and a second point 420, 502, or 603 of an external electronic device separated from the wearable device. The method may comprise identifying a time point 421-1 at which at least a portion of the graphic effect intersects the second point based on identifying the distance. The method may comprise transmitting, through communication circuitry 135, a signal for controlling an actuator of the external electronic device to output vibration having a magnitude determined based on the distance at the time point to the external electronic device.

For example, displaying the graphic effect may comprise obtaining first haptic pattern information 183-1 indicating the vibration related to the event, based on identifying the event. Displaying the graphic effect may comprise displaying the graphic effect on the display, based on the first haptic pattern information.

For example, transmitting the signal may comprise changing the first haptic pattern information to second haptic pattern information 183-2 for controlling the actuator of the external electronic device based on at least one of a type of the external electronic device and the distance. Transmitting the signal may comprise transmitting, to the external electronic device, prior to the time point, the signal requesting to output the vibration based on the magnitude corresponding to the second haptic pattern information at the time point.

For example, changing to the second haptic pattern information may comprise changing the first haptic pattern information to the second haptic pattern information having a second vibration intensity smaller than a first vibration intensity corresponding to the first haptic pattern information, based on the distance.

For example, obtaining the first pattern information may comprise identifying the event indicating contact between at least one body part of a user of the wearable device and a virtual object 415 or 701 displayed on the display. Obtaining the first pattern information may comprise obtaining the first haptic pattern information based on a type of the virtual object.

For example, changing to the second haptic pattern information may comprise changing the first haptic pattern information to the second haptic pattern information, based on user perception information 181 related to vibration.

For example, the user perception information may be obtained based on a user interface 910 for identifying an intensity of vibration generated by the external electronic device at a body part of a user wearing the external electronic device according to the type of the external electronic device.

As described above, according to an embodiment, in a computer readable storage medium storing instructions, the instructions, when executed by a processor 110 of a wearable device 101, may cause the wearable device to display a graphic effect 410 or 606 spreading from a first point to an external space, on a display 120, in response to an event that occurs at the first point 420, 501, 602, or 702 separated from the wearable device and causes an output on vibration. The instructions executed by the processor may cause the wearable device to identify a distance 420-1 between the first point and a second point 420, 502, or 603 of an external electronic device separated from the wearable device. The instructions executed by the processor may cause the wearable device to identify a time point 421-1 at which at least a portion of the graphic effect intersects the second point based on identifying the distance. The instructions executed by the processor may cause the wearable device to transmit, through communication circuitry 135, a signal for controlling an actuator of the external electronic device to output vibration having a magnitude determined based on the distance at the time point to the external electronic device.

For example, the instructions executed by the processor may cause the wearable device to obtain first haptic pattern information 183-1 indicating the vibration related to the event, based on identifying the event. The instructions executed by the processor may cause the wearable device to display the graphic effect on the display, based on the first haptic pattern information.

For example, the instructions executed by the processor may cause the wearable device to change the first haptic pattern information to second haptic pattern information 183-2 for controlling the actuator of the external electronic device based on at least one of a type of the external electronic device and the distance. The instructions executed by the processor may cause the wearable device to transmit, to the external electronic device, prior to the time point, the signal requesting to output the vibration based on the magnitude corresponding to the second haptic pattern information at the time point.

For example, the instructions executed by the processor may cause the wearable device to change the first haptic pattern information to the second haptic pattern information having a second vibration intensity smaller than a first vibration intensity corresponding to the first haptic pattern information, based on the distance.

For example, the instructions executed by the processor may cause the wearable device to identify the event indicating contact between at least one body part of a user of the wearable device and a virtual object 415 or 701 displayed on the display. The instructions executed by the processor may cause the wearable device to obtain the first haptic pattern information based on a type of the virtual object.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device (101), comprising:
communication circuitry (135);
a display (120); and
at least one processor (110) including processing circuitry;
memory (115) comprising one or more storage media storing instructions;
wherein the instructions, when executed by the at least one processor individually or collectively, cause the electronic device to:
display a graphic effect (410; 606) spreading from a first point to an external space, on the display, in response to an event that occurs at the first point (420; 501; 602; 702) separated from the wearable device and causes an output on vibration;
identify a distance (420-1) between the first point and a second point (420; 502; 603) of an external electronic device separated from the wearable device;
identify a time point (421-1) at which at least a portion of the graphic effect intersects the second point based on identifying the distance; and
transmit, through the communication circuitry, a signal for controlling an actuator of the external electronic device to output vibration having a magnitude determined based on the distance at the time point to the external electronic device.

2. The wearable device of claim 1, wherein the instructions, when executed by the at least one processor individually or collectively, cause the electronic device to:
obtain first haptic pattern information (183-1) indicating the vibration related to the event, based on identifying the event, and
display the graphic effect on the display, based on the first haptic pattern information.

3. The wearable device of any one of claims 1 and 2, wherein the instructions, when executed by the at least one processor individually or collectively, cause the electronic device to:
change the first haptic pattern information to second haptic pattern information (183-2) for controlling the actuator of the external electronic device based on at least one of a type of the external electronic device and the distance; and
transmit, to the external electronic device, prior to the time point, the signal requesting to output the vibration based on the magnitude corresponding to the second haptic pattern information at the time point.

4. The wearable device of any one of claims 1 to 3, wherein the instructions, when executed by the at least one processor individually or collectively, cause the electronic device to:
change the first haptic pattern information to the second haptic pattern information having a second vibration intensity smaller than a first vibration intensity corresponding to the first haptic pattern information, based on the distance.

5. The wearable device of any one of claims 1 and 4, wherein the instructions, when executed by the at least one processor individually or collectively, cause the electronic device to:
identify the event indicating contact between at least one body part of a user of the wearable device and a virtual object (415; 701) displayed on the display, and
obtain the first haptic pattern information based on a type of the virtual object.

6. The wearable device of any one of claims 1 to 5, wherein the instructions, when executed by the at least one processor individually or collectively, cause the electronic device to:
change the first haptic pattern information to the second haptic pattern information, based on user perception information (181) related to vibration.

7. The wearable device of any one of claims 1 to 6,
wherein the user perception information is obtained based on a user interface (910) for identifying an intensity of vibration generated by the external electronic device at a body part of a user wearing the external electronic device according to the type of the external electronic device.

8. The wearable device of any one of claims 1 and 7, wherein the instructions, when executed by the at least one processor individually or collectively, cause the electronic device to:
transmit the signal causing the external electronic device to output vibration corresponding to the second haptic pattern information while at least a portion of the graphic effect is included in an area corresponding to the second point.

9. A method of a wearable device (101), the method comprises:
displaying a graphic effect (410; 606) spreading from a first point to an external space, on a display (120), in response to an event that occurs at the first point (420; 501; 602; 702) separated from the wearable device and causes an output on vibration;
identifying a distance (420-1) between the first point and a second point (420; 502; 603) of an external electronic device separated from the wearable device;
identifying a time point (421-1) at which at least a portion of the graphic effect intersects the second point based on identifying the distance; and
transmitting, through communication circuitry (135), a signal for controlling an actuator of the external electronic device to output vibration having a magnitude determined based on the distance at the time point to the external electronic device.

10. The method of claim 9, displaying the graphic effect comprises:
obtaining first haptic pattern information (183-1) indicating the vibration related to the event, based on identifying the event, and
displaying the graphic effect on the display, based on the first haptic pattern information.

11. The method of any one of claims 9 and 10, transmitting the signal comprises:
changing the first haptic pattern information to second haptic pattern information (183-2) for controlling the actuator of the external electronic device based on at least one of a type of the external electronic device and the distance; and
transmitting, to the external electronic device, prior to the time point, the signal requesting to output the vibration based on the magnitude corresponding to the second haptic pattern information at the time point.

12. The method of any one of claims 9 to 11, changing to the second haptic pattern information comprises:
changing the first haptic pattern information to the second haptic pattern information having a second vibration intensity smaller than a first vibration intensity corresponding to the first haptic pattern information, based on the distance.

13. The method of any one of claims 9 to 12, obtaining the first pattern information comprises:
identifying the event indicating contact between at least one body part of a user of the wearable device and a virtual object (415; 701) displayed on the display, and
obtaining the first haptic pattern information based on a type of the virtual object.

14. The method of any one of claims 9 to 13, changing to the second haptic pattern information comprises:
changing the first haptic pattern information to the second haptic pattern information, based on user perception information (181) related to vibration.

15. A computer readable storage medium storing instructions, wherein the instructions, when executed by a processor of a wearable device, cause the wearable device to:
display a graphic effect (410; 606) spreading from a first point to an external space, on a display (120), in response to an event that occurs at the first point (420; 501; 602; 702) separated from the wearable device and causes an output on vibration;
identify a distance (420-1) between the first point and a second point (420; 502; 603) of an external electronic device separated from the wearable device;
identify a time point (421-1) at which at least a portion of the graphic effect intersects the second point based on identifying the distance; and
transmit, through communication circuitry (135), a signal for controlling an actuator of the external electronic device to output vibration having a magnitude determined based on the distance at the time point to the external electronic device.
